# EUROPEAN PATENT APPLICATION

(11) **EP 3 118 810 A1**
(43) Date of publication of application: **18.01.2017**
(21) Application number: 15760931.4
(22) Date of filing: 12.03.2015
(51) Int. Cl.: G06Q 50/26, G06F 21/32

(54) **INFORMATION PROCESSING METHOD AND INFORMATION PROCESSING SYSTEM**

(30) Priority: 14.03.2014 JP 2014051808; 09.09.2014 JP 2014183596
(71) Applicant: Kabushiki Kaisha Toshiba, Minato-ku Tokyo 105-8001 (JP)
(72) Inventor: SAITO, Hiroo, Tokyo 105-8001 (JP); SUKEGAWA, Hiroshi, Tokyo 105-8001 (JP)
(74) Representative: Hoffmann Eitle
(86) International application number: PCT/JP2015/001359
(87) International publication number: WO 2015/136938

(57) **Abstract**

According to one embodiment, an information processing method includes a process to execute, using first biological data read from a medium held by a passer passing through a first position, and second biological data acquired from an image obtained by imaging the passer passing through the first position, a first authentication processing to authenticate the passer; a process to store third biological data, based on at least one of the first biological data and the second biological data used in the first authentication processing, in a memory, when the authentication of the passer by the first authentication processing has succeeded; a process to execute, using fourth biological data acquired from an image obtained by imaging a passer passing through a second position at a more downstream side than the first position in a proceeding direction of the passer, and the third biological data stored in the memory, a second authentication processing to authenticate the passer; and a process to permit passing through the second position, when the passer is authenticated by the second authentication processing.

## Description

### FIELD

Embodiments described herein relate to an information processing method and an information processing system.

### BACKGROUND

There is a technology to perform authentication using biological data, to a lot of passers in an important facility and a public facility, and so on. For example, there is a technology which acquires biological data at the entrance of an apparatus such as an escalator where the movement of a passer is limited, and performs authentication of the passer till the passer reaches the exit of the relevant apparatus.

In addition, there is a technology which performs authentication without omitting a passer and effectively, when passers are large, by changing the authentication of a passer into a simple processing. In addition, there is a technology which performs a plurality of times of authentication to a passer, and enhances the authentication accuracy of the passer in stages.

However, the technology which acquires biological data in the entrance of an apparatus such as an escalator where the movement of a passer is limited, and performs authentication till the relevant passer reaches the exit, does not make efficient the authentication itself using biological data, but is effective when there is time to spare in the authentication. In addition, regarding the technology which changes the authentication of a passer into a simple one when passers are large, there is a possibility that a passer to whom the strict authentication is not applied may be generated, and thereby the authentication accuracy may drop. In addition, the technology which performs a plurality of times of authentication to a passer and enhances the authentication accuracy in stages cannot be applied to a place where there is no limitation in the passage route of a passer, and when passers are exchanged with each other in the middle of the passage route of the passers, it is not possible to detect the exchange of the passers.

In addition, in a case in which an authentication processing of a person using biological data is performed to a lot of persons in an important facility and a public facility, when an authentication processing of a person is applied to the persons in high accuracy, since the processing time for the relevant authentication processing tends to be long, and thereby the passing of persons may be delayed. Accordingly, there are a technology in which a photograph image obtained by photographing a whole body of a person passing through a first position such as a departure examination is transmitted to a second position such as an immigration examination and so on at an arrival destination of an airplane, and thereby the relevant photograph image can be used in the immigration examination by visual checking, and a technology to perform authentication of a person, using a facial image of a person obtained by imaging the relevant person moving around a gate, a waiting room, or a corridor, and a facial image read from a personal authentication medium held by the relevant person.

In addition, a technology to transmit a photograph image to a second position such as an immigration examination of an arrival destination of an airplane makes the relevant photograph image to be used in the immigration examination by visual checking, and it is not possible to make automatic authentication of a person at the second position efficient. In addition, regarding the technology to perform authentication of a person, using a facial image of a person obtained by imaging the person while the person is moving around a gate, a waiting room, or a corridor, and a facial image read from a personal authentication medium held by the person, it is difficult to achieve stabilization of the authentication accuracy, because of the variation such as aged deterioration of a facial image read from the personal authentication medium.

### BRIEF DESCRIPTION OF THE DRAWINGS

FIG. 1 is as diagram showing a configuration of an information processing system to which an information processing method according to a first embodiment is applied;
FIG. 2 is a block diagram showing a functional configuration of the information processing system according to the first embodiment;
FIG. 3 is a diagram showing a collation form corresponding to a secular change of a person, in the information processing system according to the first embodiment;
FIG. 4 is a flow chart showing a flow of an authentication processing of a passer in the first authenticating device which the information processing system according to the first embodiment has;
FIG. 5 is a diagram showing a display example of the authentication result of a passer in the first authenticating device which the information processing system according to the first embodiment has;
FIG. 6 is a flow chart showing a flow of an authentication processing of a passer in the second authenticating device which the information processing system according to the first embodiment has;
FIG. 7 is a diagram showing a display example of the authentication result of a passer in the second authenticating device which the information processing system according to the first embodiment has;
FIG. 8 is a block diagram showing a functional configuration of an information processing system according to a second embodiment;
FIG. 9 is a flow chart showing a flow of an authentication processing of a passer in the second authenticating device which the information processing system according to the second embodiment has;
FIG. 10 is a diagram showing a configuration of an information processing system to which an immigration control system according to a third embodiment is applied;
FIG. 11 is a display portion as a manager monitor which displays, in contrast, a facial image of a person photographed by a camera, and a facial image of a person stored in a passport held by a passing person, in the information processing system to which the immigration control system according to the third embodiment is applied;
FIG. 12 is a diagram showing impertinent examples as a photographed image, in the immigration control system according to the third embodiment;
FIG. 13 is a diagram showing a functional configuration of the boarding guide device, the first authenticating device, and the second authenticating device which the information processing system according to the third embodiment has;
FIG. 14 is a diagram showing a functional configuration of the third authenticating device which the information processing system according to the third embodiment has;
FIG. 15 is a diagram showing a functional configuration of the fourth authenticating device which the information processing system according to the third embodiment has;
FIG. 16 is a flow chart showing a flow of an acquisition processing of biological data by the boarding guide device which the information processing system according to the third embodiment has;
FIG. 17 is a flow chart showing a flow of an authentication processing by the first authenticating device which the information processing system according to the third embodiment has;
FIG. 18 is a flow chart showing a flow of an authentication processing by the second authenticating device which the information processing system according to the third embodiment has;
FIG. 19 is a flow chart showing a flow of an authentication processing, when the second authenticating device which the information processing system according to the third embodiment has, is provided with a reading portion which can read discrimination data from a passport;
FIG. 20 is a flow chart showing a flow of an authentication processing by the third authenticating device which the information processing system according to the third embodiment has;
FIG. 21 is a flow chart showing a flow of an authentication processing by the fourth authenticating device which the information processing system according to the third embodiment has;
FIG. 22 is a perspective view showing an information processing system according to a fourth embodiment during walking; and
FIG. 23 is a flow chart showing a flow of an authentication processing by the information processing system according to the fourth embodiment.

### DETAILED DESCRIPTION

According to one embodiment, there is provided an information processing method, including: a process to execute, using first biological data read from a medium held by a passer passing through a first position, and second biological data acquired from an image obtained by imaging the passer passing through the first position, a first authentication processing to authenticate the passer; a process to store third biological data, based on at least one of the first biological data and the second biological data used in the first authentication processing, in a memory, when the authentication of the passer by the first authentication processing has succeeded; a process to execute, using fourth biological data acquired from an image obtained by imaging a passer passing through a second position at a more downstream side than the first position in a proceeding direction of the passer, and the third biological data stored in the memory, a second authentication processing to authenticate the passer; and a process to permit passing through the second position, when the passer is authenticated by the second authentication processing.

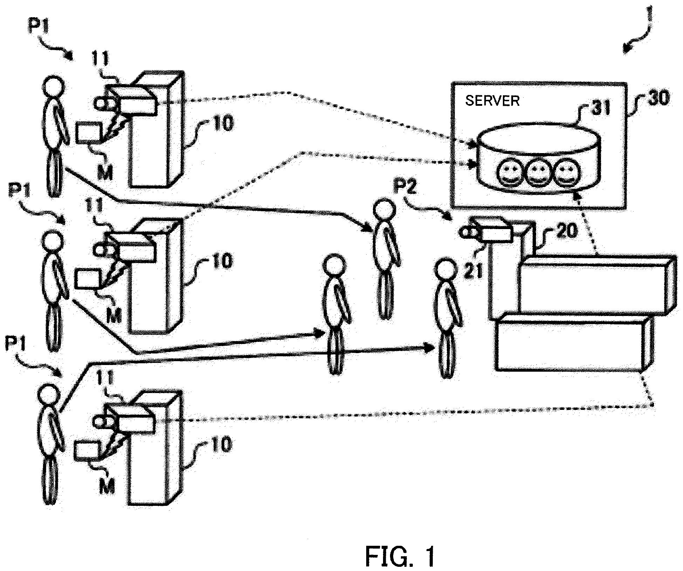

(First embodiment) FIG. 1 is a diagram showing a configuration of an information processing system to which an information processing method according to a first embodiment is applied. As shown in FIG. 1, an information processing system 1 according to the present embodiment is provided with, a first authenticating device 10 which executes a first authentication processing to authenticate a passer, using biological data (an example of first biological data) read from a medium M that a passer passing through a first position P1 holds, and biological data (an example of second biological data) acquired from a first image G1 that is obtained by imaging the passer passing through the first position P1 by a first imaging portion 11, a server 30 having a feature data memory 31 which stores third biological data (hereinafter, called feature data for authentication) generated based on at least one of the second biological data used in the first authentication processing, when the authentication of the passer by the first authentication processing has succeeded, and a second authenticating device 20 which executes a second authentication processing to authenticate a passer, using biological data (an example of fourth biological data) acquired from a second image G2 that is obtained by imaging a passer passing through a second position P2 that is at the more downstream side than the first position P1 in the moving direction of the passer by a second imaging portion 21, and the feature data for authentication stored in the feature data memory 31. Further, the information processing system 1 is provided with a second display portion 26 as a manager monitor which displays the result of the authentication processing by the first authenticating device 10 and the second authenticating device 20 for a manager. Here, the more downstream side than the first position P1 in the moving direction of the passer is a position where the passer passes through after the first position P1 in the passing route of the passer.

That is, after having executed the first authentication processing to a passer passing through the first position P1, the information processing system 1 according to the present embodiment executes the second authentication processing to authenticate a passer, using the biological data acquired from the second image G2 obtained by imaging a passer passing through the second position P2 by the second imaging portion 21, and the feature data for authentication stored in the feature data memory 31, and thereby performs an identification processing to detect whether or not the passer passing through the second position P2 is the same person as the passer passing through the first position P1.

By this means, when passers pass through the first position P1, and then the passers are exchanged with each other till the passers pass through the second position P2, even if the passers have succeeded in the authentication by the first authentication processing, since the passers fails in the authentication by the second authentication processing, it is possible to prevent the exchange of the passers. In addition, the first authentication processing and the second authentication processing are executed, using the biological data read from a medium M held by a passer passing through the first position P1, and thereby, since it becomes unnecessary to retrieve biological data to be used in the first, second authentication processings from a database which an upper device such as the server 30 has, and change the authentication of a passer into a simple one for shortening the time required for the first, second authentication processings, it is possible to effectively perform the authentication of a passer, while preventing the decrease of the authentication accuracy of a passer.

In other words, the information processing system 1 according to the present embodiment is a system to effectively perform the authentication of a passer, by combining the first authentication processing (so-called 1:1 collation) executed in the first authenticating device 10, and the second authentication processing (so-called 1:N collation) executed in the second authenticating device 20. Here, the 1:1 collation in the first authenticating device 10 is an authentication processing of a passer, using the biological data read from a medium M held by a passer passing through the first position P1, and the biological data acquired from the first image G1 obtained by imaging the passer passing through the first position P1 by the first imaging portion 11, before the passer reaches the second position P2, such as an entrance of a building and an entrance of a security management area, as shown in FIG. 1.

On the other hand, the 1:N collation in the second authenticating device 20 is an authentication processing of a passer, using the feature data for authentication stored in the feature data memory 31 of the server 30, and the biological data acquired from the second image G2 obtained by imaging a passer passing through the second position P2 by the second imaging portion 21, as shown in FIG. 1. That is, in the 1:N collation in the second authenticating device 20, if the biological data acquired from the second image G2 obtained by imaging by the second imaging portion 21 coincides with any of the feature data for authentication stored in the feature data memory 31 of the server 30, it is judged that the authentication of a passer has succeeded, without reading the biological data from a medium M held by a passer.

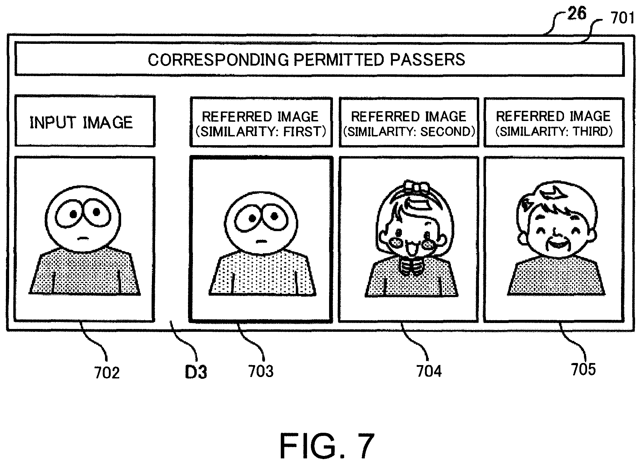

And the second authenticating device 20 executes a processing for controlling the passing of a passer, in accordance with the authentication result by the 1:N collation. Specifically, when having succeeded in the authentication by the 1:N collation, the second authenticating device 20 executes a processing to permit passing of a passer, by opening an entrance gate provided at the second position P2, or opening a lock of a door provided at the second position P2. On the other hand, when having failed in the authentication by the 1:N collation, the second authenticating device 20 executes a processing to prohibit passing of a passer, by closing the entrance gate provided at the second position P2, or prohibiting opening the lock of the door provided at the second position P2. When an entrance gate and a door are not provided at the second position P2, the second authenticating device 20 executes, as the processing to prohibit passing of a passer, processings such as to make a message (alarm) for notifying that the authentication has failed to be displayed on a second display portion 26 (refer to FIG. 1 and FIG. 7) as a manager monitor, to notify an external terminal of the relevant alarm, and to store the image (a facial image contained in the second image G2, for example) of the passer who has failed in the authentication.

According to the information processing system 1 according to the present embodiment, since it is possible to perform the authentication of a passer passing through the second position P2, without reading biological data from a medium M held by the passer passing through the second position P2, and since it becomes unnecessary to change the second authentication processing into a simple one for shortening the time required for the authentication of a passer, it is possible to prevent the generation of delay of passers and the reduction of the authentication accuracy of passers, when a lot of passers pass through the second position P2.

The information processing system 1 according to the present embodiment can be applied to an access management system, a video monitoring system and so on, which are installed in a facility where a lot of passers pass, such as a public facility, an important facility, an office building, a commercial facility. In the following description, an example to use feature data of a facial image of a passer as the biological data used for the authentication processing of a passer will be described, but without being limited to this, data of a body of a passer, such as an iris, a fingerprint, a vein, a palm print, an ear shape, for example may be used as the biological data.

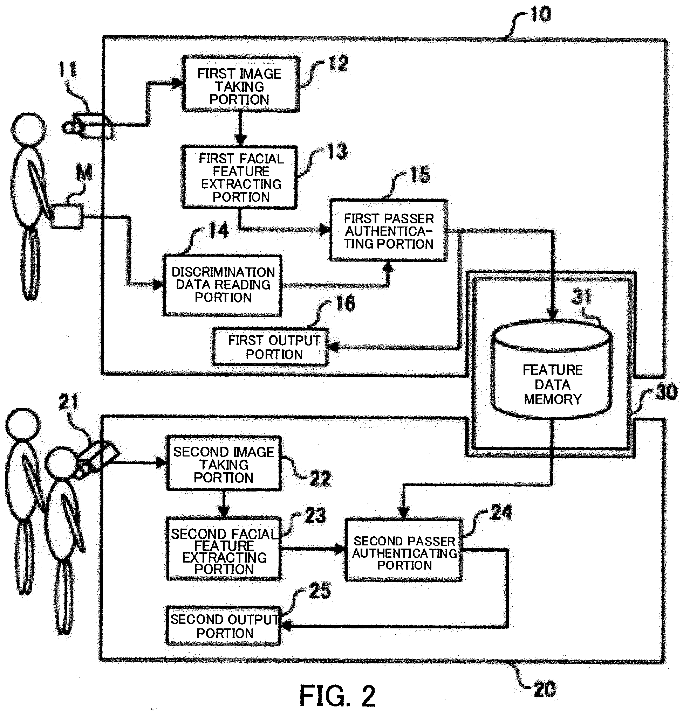

Next, a functional configuration of the information processing system 1 according to the present embodiment will be described using FIG. 2. FIG. 2 is a block diagram showing a functional configuration of the information processing system 1 according to the first embodiment.

As shown in FIG. 2, the first authenticating device 10 is provided with the first imaging portion 11 provided so that a passer passing through the first position P1 can be imaged, a first image taking portion 12 which acquires the first image G1 obtained by imaging by the first imaging portion 11, when feature data is read by a discrimination data reading portion 14 described later, a first facial feature extracting portion 13 which acquires (extracts) feature data (an example of the second biological data) of a facial image of a passer from the first image G1 acquired by the first image taking portion 12, the discrimination data reading portion 14 (an example of a reading portion) provided so that feature data (an example of the first biological data) can be read from a medium M held by the passer passing through the first position P1, a first passer authenticating portion 15 which executes the first authentication processing to authenticate a passer, using the feature data acquired by the first facial feature extracting portion 13 and the feature data read by the discrimination data reading portion 14, and a first output portion 16 which outputs the authentication result of a passer by the relevant first passer authenticating portion 15.

As shown in FIG. 2, the server 30 has the feature data memory 31 (an example of a memory) which stores the feature data for authentication (in the present embodiment, the feature data acquired from the first image G1 or the feature data read from the medium M) that is an example of the third biological data, based on at least one of the two feature data (the feature data acquired from the first image G1 and the feature data read from the medium M) which has been used in the first authentication processing by the first authenticating device 10 (the first passer authenticating portion 15).

As shown in FIG. 2, the second authenticating device 20 is provided with the second imaging portion 21 provided so that a passer passing through the second position P2 can be imaged, a second image taking portion 22 which acquires the second image G2 obtained by imaging by the relevant second imaging portion 21, a second facial feature extracting portion 23 which acquires (extracts) feature data (an example of the fourth biological data) of a facial image of a passer from the second image G2 acquired by the relevant second image taking portion 22, a second passer authenticating portion 24 which executes the second authentication processing to authenticate a passer, using the feature data acquired by the relevant second facial feature extracting portion 23 and the feature data for authentication stored in the feature data memory 31, a second output portion 25 which outputs the authentication result of a passer by the relevant second passer authenticating portion 24. In addition, the first output portion 16 of the first authenticating device 10 and the second output portion 25 of the second authenticating device 20 are connected via the first display portion 17.

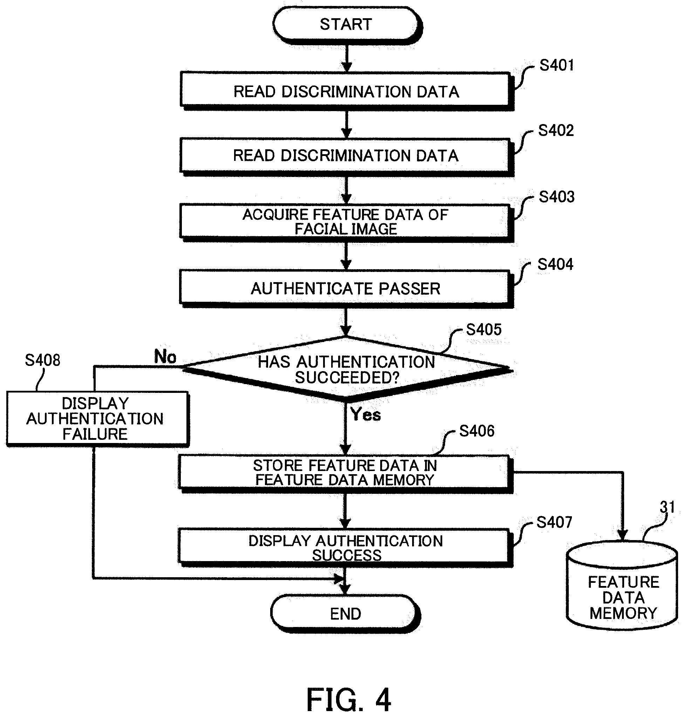

Next, an authentication processing of a passer in the first authentication device 10 which the information processing system 1 according to the present embodiment has will be described in detail, using Fig. 2 and Fig. 4. FIG. 4 is a flow chart showing a flow of an authentication processing of a passer in the first authentication device which the information processing system 1 according to the first embodiment has.

The discrimination data reading portion 14 is composed of a card reader and so on, and reads one feature data and discrimination data which makes the passer discriminable from a medium M (for example, a medium which makes the feature data of a passer readable, such as an ID card for discriminating an passer, a card provided with an RFID (Radio Frequency Identification) chip, a key, a public medium for identity verification such as an identification card and a passport) held by a passer passing through the first position P1 (step S401). In the present embodiment, data which makes the relevant passer discriminable, such as identification number (ID number), full name, sex, age, belonging, carrier, height, image data of a facial image of the passer, is included in the discrimination data.

In addition, in the present embodiment, the discrimination data reading portion 14 reads the feature data stored (or printed) in a medium M by an external device other than the first authenticating device 10, but when an image (for example, a facial image of a passer) from which the feature data can be acquired is printed on a medium M, or image data of an image from which the feature data can be acquired is stored in a medium M, the feature data may be acquired from the image printed on the medium M or the image based on the image data stored in the medium M. At this time, the discrimination data reading portion 14 acquires the feature data from the image printed on the medium M or the image based on the image data stored in the medium M, in the same manner as the first facial feature extracting portion 13 described later.

The first image taking portion 12 acquires the first image G1 (in other words, an image obtained by imaging the passer holding the medium M from which the feature data has been read by the discrimination data reading portion 14) obtained by imaging by the first imaging portion 11, when the discrimination data is read by the discrimination data reading portion 14 (step S402). In the present embodiment, the first imaging portion 11 is composed of an ITV (Industrial Television) camera and so on, for example, and is provided so that a part necessary for acquisition of the feature data (in the present embodiment, a face of a passer), out of the body of a passer passing through the first position P1 can be imaged. In addition, in the present embodiment, the first imaging portion 11 generates image data which is obtained by digitizing optical data obtained through a lens by an A/D converter in a prescribed frame rate, and outputs the image data to the first image taking portion 12.

The first facial feature extracting portion 13 acquires the feature data of a facial image of a passer contained in the relevant first image G1, from the first image G1 acquired by the first image taking portion 12 (Step S403). In the present embodiment, while moving a template for face detection which has been previously stored in the first the first authenticating device 10 within the relevant first image G1, the first facial feature extracting portion 13 obtains a correlation value (correlation coefficient) between the relevant first image G1 and the template, in the acquired first image G1. And the first facial feature extracting portion 13 detects a position where the correlation value with the template is highest in the first image G1, as a facial image. In the present embodiment, the first facial feature extracting portion 13 detects the facial image from the first image G1, using the previously stored template for face detection, but without being limited to this, the first facial feature extracting portion 13 may detect a facial image from the first image G1, using a well-known characteristic space method or subspace method, for example.

In addition, when facial images of the same passer are continuously contained in a plurality of frame images (first image G1) based on the image data of a prescribed frame rate outputted from the first imaging portion 11, it is required for the first facial feature extracting portion 13 to perform a tracking processing to detect the facial images, as the facial images of the same passer. In the present embodiment, the first facial feature extracting portion 13 estimates at what position the facial image detected from one frame image exists in the next frame image, using the method described in Japanese Patent No. 5355446 and so on, to detect the facial images continuously contained in a plurality of the frame images, as the facial images of the same passer.

Next, the first facial feature extracting portion 13 detects a position of a part of a face, such as eyes and a nose, from the detected facial image, using the method described in Japanese Patent No. 3279913 and so on. When having detected the facial images continuously contained in the plurality of frame images, as the facial images of the same passer, by the above-described tracking processing, the first facial feature extracting portion 13 detects the position of the facial part, using the facial image which has been detected from any of the plurality of frame images containing the facial image of the same passer, or all of the plurality of relevant frame images.

When detecting a position of a facial part, the first facial feature extracting portion 13 acquires feature data of the facial image of the passer, based on the detected position of the facial part, digitizes the relevant acquired feature data, and outputs the digitized feature data to the first passer authenticating portion 15. Specifically, the first facial feature extracting portion 13 segments a facial image of a prescribed size and a prescribed shape from the first image G1, based on the detected facial part, and acquires contrast data of the segmented facial image as the feature data. For example, the first facial feature extracting portion 13 acquires the contrast data of the facial image of a rectangular shape of m pixels X n pixels that is segmented from the first image G1, based on the position of the detected facial part, as a feature vector (an example of feature data) of m X n dimensions.

In addition, the first facial feature extracting portion 13, may acquire a subspace indicating the feature of the facial image which the first image G1 contains, using the subspace method described in Japanese Patent No. 4087953 and so on, as the feature data.

The first passer authenticating portion 15 executes the first authentication processing to authenticate a passer, using the feature data acquired by the first facial feature extracting portion 13, and the feature data read by the discrimination data reading portion 14, (step S404). In other words, the first passer authenticating portion 15 determines whether or not the feature data acquired from the first image G1, and the feature data read from a medium M by the discrimination data reading portion 14 are the feature data of the same person. By this means, since it becomes unnecessary to retrieve the feature data used for the first authentication processing from a database which an upper device such as the server 30 has, and change the authentication of a passer into a simple one for shortening the time required for the first authentication processing, it is possible to effectively perform the authentication of a passer, while preventing the decrease of the authentication accuracy of a passer.

In the present embodiment, the first passer authenticating portion 15 calculates a similarity of the feature data acquired by the first facial feature extracting portion 13, and the feature data read by the discrimination data reading portion 14. Specifically, the first passer authenticating portion 15 calculates a similarity index of the feature data acquired by the first facial feature extracting portion 13, and the feature data read by the discrimination data reading portion 14. Here, the similarity index is a similarity between the two feature vectors by a simple similarity method, or a similarity between the subspaces by a subspace method, based on the feature data extracted by the first facial feature extracting portion 13, such as the feature vector and the subspace, and the feature data read by the discrimination data reading portion 14, such as the feature vector and the subspace.

For example, the first passer authenticating portion 15 normalizes the feature vector extracted by the first facial feature extracting portion 13 and the feature vector read by the discrimination data reading portion 14 such that each of the feature vectors has a length "1", and calculates an inner product thereof, as the similarity between the feature vectors. In addition, the first passer authenticating portion 15 calculates an angle formed by the subspace acquired by the first facial feature extracting portion 13, and the subspace read by the discrimination data reading portion 14, as the similarity, using the subspace method, the multiple similarity method described in Japanese Patent No. 4087953 and so on.

In addition, as a similarity index other than the similarity between the two feature vectors by a simple similarity method, and the similarity between the subspaces by a subspace method, the first passer authenticating portion 15 can use a similarity between the two feature data, based on a distance, such as an Euclidean distance or a Mahalanobis distance, in a feature space composed of the feature data acquired by the first facial feature extracting portion 13, and the feature data read by the discrimination data reading portion 14. When the similarity between the two feature data, based on the distance, such as an Euclidean distance and a Mahalanobis distance, in the feature space, the similarity becomes lower as the value of the distance becomes larger, and the similarity becomes higher as the value of the distance becomes smaller.

And, the first passer authenticating portion 15 judges to have succeeded in the authentication of a passer, when the calculated similarity exceeds a prescribed first threshold value (step S405: Yes). On the other hand, the first passer authenticating portion 15 judges to have failed in the authentication of a passer, when the calculated similarity is not more than the prescribed threshold value (step S405: No).

When having succeeded in the authentication of a passer (step S405: Yes), the first passer authenticating portion 15 (an example of a storage control portion) stores (stores) the feature data for authentication, based on at least one of the two feature data used for the first authentication processing, in the feature data memory 31 (step S406). On the other hand, when having failed in the authentication of a passer (step S405: No), the first passer authenticating portion 15 prohibits storing the feature data for authentication, in the feature data memory 31. In the present embodiment, the first passer authenticating portion 15 makes the feature data acquired by the first facial feature extracting portion 13 or the feature data read by the discrimination data reading portion 14, as the feature data for authentication to be stored in the feature data memory 31. At this time, the first passer authenticating portion 15 makes the feature data for authentication to be stored in the feature data memory 31, in association with the feature data read by the discrimination data reading portion 14. In the present embodiment, the first passer authenticating portion 15 makes the feature data itself acquired by the first facial feature extracting portion 13, or the feature data itself read by the discrimination data reading portion 14 to be stored in the feature data memory 31, as the feature data for authentication, but the first passer authenticating portion 15 may make the feature vector that is an example of the feature data and a correlation matrix for calculating the subspace to be stored in the feature data memory 31, as the feature data for authentication.

In addition, in the present embodiment, the first passer authenticating portion 15 makes the feature data for authentication, the image data of the facial image of a passer contained in the first image G1, time data relating a time when the first authentication processing was executed, device data which makes the first authenticating device 10 that has executed the first authentication processing discriminable, to be stored in the feature data memory 31, in association with the feature data read by the discrimination data reading portion 14.

By the way, when the feature data read by the discrimination data reading portion 14 out of the two feature data used in the first authentication processing is stored in the feature data memory 31, as the feature data for authentication, the second authenticating device 20 comes to perform the authentication of a passer, using the same data (the feature data read by the discrimination data reading portion 14) as the feature data used in the authentication of the passer who has passed through the first position P1. By this means, when exchange of passers has occurred between the first position P1 and the second position P2, since it is possible to increase the possibility of detecting that a passer who has passed through the first position P1 and a passer who has passed through the second position P2 are different, it is possible to enhance the security against the exchange of passers.

However, feature data read from a medium M by the discrimination data reading portion 14 is generally feature data acquired from the image which was obtained by imaging a passer before the first authentication processing is executed. For this reason, when the feature data acquired from the image obtained by imaging the passer has changed by the influence of secular change and so on of the passer, the similarity between the feature data read from a medium M by the discrimination data reading portion 14, and the feature data acquired from an image obtained by imaging the passer decreases. That is, the feature data read from the medium M by the discrimination data reading portion 14 is subject to the secular change and so on of a passer.

Accordingly, in this case, the first passer authenticating portion 15 makes the feature data acquired by the first facial feature extracting portion 13 to be stored in the feature data memory 31, as the feature data for authentication. By this means, the authentication processing of a passer in the second authenticating device 20 is performed using the feature data acquired from the image (the first image G1) obtained by imaging a passer at the time of executing the first authentication processing, and since the influence of the secular change and so on of a passer can be decreased, it is possible to improve the authentication accuracy of a passer.

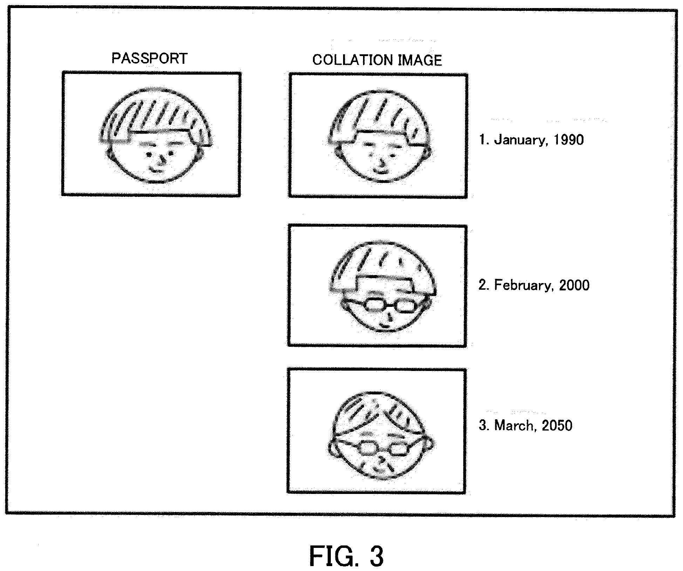

In the present embodiment, in order to reduce the influence of the secular change of a passer, it is possible to store the secular change data shown in FIG. 3 in association with a facial image stored in a passport, as data. As shown in FIG. 3, a collation image of a face when the photographing time is January, 1990, a collation image of the face at the time of February, 2000, 10 years after that time, and a collation image of the face at the time of March, 2050, further 50 years later, change for the facial image stored in a passport. In order to deal with the secular change of a person like this, a passport image and a photographed image are recorded together as a history. At the time of collating a person oneself, similarities are calculated time sequentially, and if the respective similarities are not less than a threshold value, the relevant person is determined to be the person oneself. For example, assuming that a facial image of a passport is x(0), facial images remaining in the history are time sequentially x(1), ... , x(t), a similarity between a facial image a and a facial image b is S(a, b), and a threshold value for determining whether or not to be the person oneself is θ, when S(x(0), x(1)) > θ, S(x(1), x(2)) > θ, S(x(2), x(3)) > θ, ... , S(x(t-1), x(t)) > θ, it is determined that the relevant person is the person oneself. By the secular change, S(x(0), x(t)) becomes smaller than θ, and thereby it is possible to decrease an error to determine the person oneself as another person.

For example, when an issue date of the relevant medium M stored (or printed) in a medium M is a day that is after a day going back from a day when the first authentication processing is executed by a prescribed term, the first passer authenticating portion 15 sets feature data read from the medium M by the discrimination data reading portion 14 to feature data for authentication. On the other hand, when the issue date of the medium M is a day that is before the day going back from the day when the first authentication processing is executed by the prescribed term, the first passer authenticating portion 15 may set the feature data acquired by the first facial feature extracting portion 13 to the feature data for authentication. In addition, the first passer authenticating portion 15 may make the feature data for authentication containing the both of the feature data acquired by the first facial feature extracting portion 13, and the feature data read by the discrimination data reading portion 14 to be stored in the feature data memory 31. In this case, when the feature data (an example of the fourth biological data) acquired from the second image G2 obtained by imaging the passer passing through the second position P2 by the second imaging portion 21 coincides with any one of the two feature data contained in the feature data for authentication stored in the feature data memory 31, the second authenticating device 20 judges to have succeeded in the authentication of the passer. By this means, it is possible to decrease the possibility to fail in the authentication of a passer.

In addition, the first passer authenticating portion 15 may make data which is obtained by updating the feature data read from the medium M by the discrimination data reading portion 14, based on the first image G1 acquired by the first image taking portion 12 to be stored in the feature data memory 31, as the feature data for authentication. By this means, since the influence of the secular change and so on of a passer can be reduced, at the time of the authentication processing using the feature data for authentication stored in the feature data memory 31, it is possible to improve authentication accuracy of a passer.

Specifically, the first passer authenticating portion 15 makes the feature data acquired from the first image G1 to be contained in the feature data read from the medium M by the discrimination data reading portion 14, to update the feature data read from the relevant medium M. Or, when the feature data read from the medium M by the discrimination data reading portion 14 is a subspace, the first passer authenticating portion 15 may update the relevant subspace by adding the first image G1 to the image used for creating the relevant subspace. Or, the first passer authenticating portion 15 may perform updating by replacing the feature date read from the medium M by the discrimination data reading portion 14, by the feature data acquired from the first image G1.

In addition, the first passer authenticating portion 15, executes, to a plurality of the feature data for authentication stored in the feature date memory 31, a processing for removing data unnecessary for discrimination between the relevant feature data for authentication. For example, the first passer authenticating portion 15 projects or converts the feature vector stored in the feature data for authentication in the feature data memory 31 in the subspace, using the constrained mutual subspace method described in Japanese Patent No. 4,087,953 and so on, to enhance the authentication accuracy between the feature data for authentication stored in the feature data memory 31. By this means, since it is possible to prevent that the second authentication processing is executed using unnecessary data contained in the feature data for authentication, it is possible to improve the authentication accuracy of a passer by the second authentication processing.

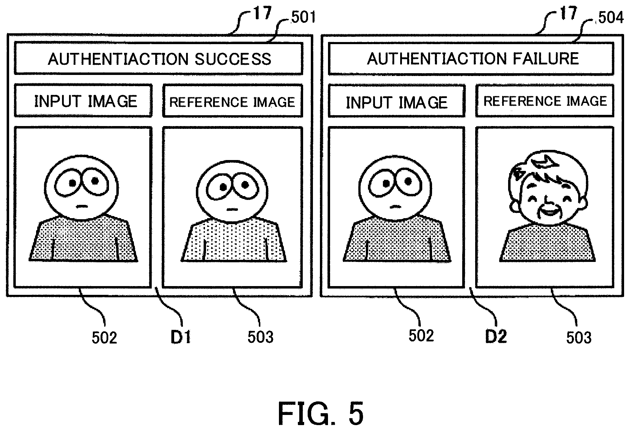

When the authentication of a passer by the first passer authenticating portion 15 has succeeded (step S405: Yes), the first output portion 16 makes a message for notifying that the authentication of a passer has succeeded to be displayed on a first display portion 17 (refer to FIG.2 and FIG. 5) provided in the first authenticating device 10, and a manager watches the message (step S407). On the other hand, when the authentication of a passer by the first passer authenticating portion 15 has failed (step S405: No), the first output portion 16 makes a message for notifying that the authentication of a passer has failed to be displayed on the first display portion 17 (refer to Fig. 2 and FIG. 5) provided in the first authenticating device 10 (step S408).

FIG. 5 is a diagram showing a display example of the authentication result of a passer in the first authenticating device which the information processing system according to the first embodiment has. In the present embodiment, when the authentication of a passer by the first passer authenticating portion 15 has succeeded, the first output portion 16 makes a first image plane D1 on the first display portion 17 which the first authenticating device 10 has, as shown in FIG. 5. Here, the first image plane D1 includes a message 501 for notifying the success of the authentication of a passer, an input image 502 that is the facial image contained in the first image G1, a referred image 503 that is a facial image (in the present embodiment, a facial image based on the image data read from the medium M as the discrimination data) of an acquisition source of the feature data read by the discrimination data reading portion 14. When the authentication of a passer by the first passer authenticating portion 15 has succeeded, since the feature data acquired from the facial image contained in the first image G1, and the feature data read by the discrimination data reading portion 14 are similar, the input image 502 and the referred image 503 become also similar images.

On the other hand, when the authentication of a passer by the first passer authenticating portion 15 has failed, the first output portion 16 makes a second image plane D2 including a message 504 for notifying the failure of the authentication of a passer, the input image 502, the referred image 503 on the first display portion 17. When the authentication of a passer by the first passer authenticating portion 15 has failed, since the feature data acquired from the facial image contained in the first image G1, and the feature data read by the discrimination data reading portion 14 are not similar, the input image 502 and the referred image 503 become also images not similar to each other.

In the present embodiment, the first output portion 16 makes the first image plane D1 or the second image plane D2 to be displayed on the first display portion 17, as a manager monitor, to notify the authentication result of a passer by the first passer authenticating portion 15, but without being limited to this, for example, the first output portion 16 may notify the authentication result of a passer, in such a manner that a sound is emitted from a speaker not shown with which the first authenticating device 10 is provided, or the authentication result of a passer is transmitted to an upper device (a terminal which a manager of the information processing system 1 operates) of the first authenticating device 10 by wired or wireless communication.

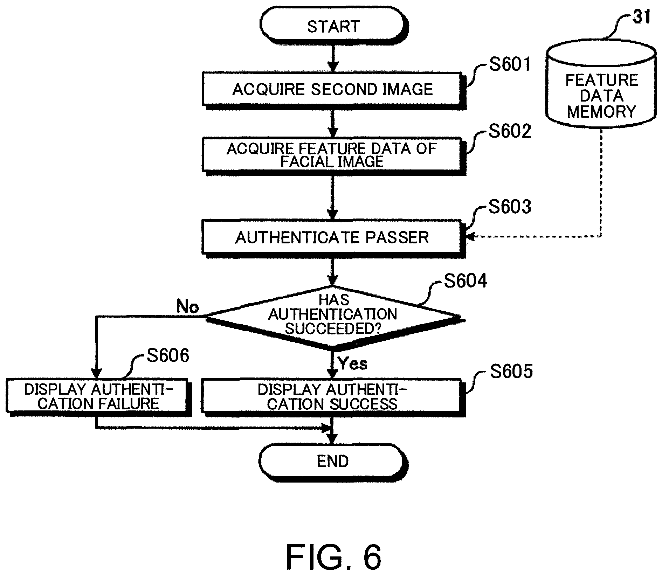

Next, an authentication processing of a passer in the second authenticating device 20 which the information processing system 1 according to the present embodiment has will be described in detail, using FIG. 2 and FIG. 6. FIG. 6 is a flow chart showing a flow of the authentication processing of a passer in the second authenticating device 20 which the information processing system according to the first embodiment has.

When a passer passing through the second position P2 is detected by a sensor not shown which the second authenticating device 20 has, such as a human detection sensor and an infrared sensor, the second image taking portion 22 acquires the second image G2 obtained by imaging by the second imaging portion 21 (step S601). In the present embodiment, the second imaging portion 12 is composed of an ITV camera and so on, for example, in the same manner as the first imaging portion 11, and is provided so that a part necessary for the acquisition of the feature data (in the present embodiment, a face of a passer), out of the body of a passer passing through the second position P2 can be imaged. In addition, in the present embodiment, the second imaging portion 21 generates image data which is obtained by digitizing optical data obtained through a lens by an A/D converter in a prescribed frame rate, and outputs the image data to the second image taking portion 22.

The second facial feature extracting portion 23 acquires the feature data of a facial image of a passer contained in the relevant second image G2, from the second image G2 acquired by the second image taking portion 22 (Step S602). In the present embodiment, the second facial feature extracting portion 23 acquires the feature data of the facial image of the passer contained in the second image G2, in the same manner as the first facial feature extracting portion 13 which the first authenticating device 10 has.

The second passer authenticating portion 24 executes the second authentication processing to authenticate a passer, using the feature data acquired by the second facial feature extracting portion 23 and the feature data for authentication stored in the feature data memory 31 (step S603). By this means, it is possible to perform the authentication of the passer passing through the second position P2, without reading the biological data from the medium M held by the passer passing through the second position P2, and since it becomes unnecessary to switch the second authentication processing into a simple one for shortening the time required for the authentication of the passer passing through the second positon P2, it is possible to prevent the generation of delay of passers and the reduction of the authentication accuracy of a passer, when a lot of passers pass through the second position P2.

In the present embodiment, the second passer authenticating portion 24 judges to have succeeded in the authentication of a passer, when the feature data acquired by the second facial feature extracting portion 23 coincides with any of the feature data for authentication stored in the feature data memory 31. Here, the coincidence shall include a case in which the feature data acquired by the second facial feature extracting portion 23 completely coincides with the feature data for authentication stored in the feature data memory 31, and a case in which the relevant two feature data are similar to each other (in the present embodiment, the similarity of the relevant two feature data exceeds a prescribed second threshold value).

Specifically, the second passer authenticating portion 24 calculates similarities between the feature data acquired by the second facial feature extracting portion 23, and the respective feature data for authentication stored in the feature data memory 31, in the same manner as the first passer authenticating portion 15. And the second passer authenticating portion 24 specifies the feature data for authentication having the highest similarity with the feature data acquired by the second facial feature extracting portion 23, out of the feature data for authentication stored in the feature data memory 31.

And when the similarity of the feature data acquired by the second facial feature extracting portion 23 and the specified feature data for authentication exceeds the prescribed second threshold value, the second passer authenticating portion 24 judges to have succeeded in the authentication of a passer. On the other hand, when the similarity of the feature data acquired by the second facial feature extracting portion 23 and the specified feature data for authentication is not more than the second threshold value, the second passer authenticating portion 24 judges to have failed in the authentication of a passer. The second passer authenticating portion 24 performs the authentication of a passer, in the same manner as the first passer authenticating portion 15 which the first authenticating device 10 has. Here, the second threshold value may be set to the same value as the first threshold value used in the authentication of a passer in the first authenticating device 10, or may be set to a value different from the first threshold value.

In addition, when having succeeded in the authentication of a passer, the second passer authenticating portion 24 erases the feature data for authentication which has coincided with the feature data acquired by the relevant second facial feature extracting portion 23 from the feature data memory 31. At this time, the second passer authenticating portion 24 also erases the discrimination data, and the additional data, such as the image data, the time data, and the device data that have been stored, in association with the feature data for authentication which has coincided with the feature data acquired by the second facial feature extracting portion 23, from the feature data memory 31.

By this means, when the authentication of a passer has succeeded, since it is prevented that the feature data for authentication coincident with the feature data acquired by the second facial feature extracting portion 23 is used for the authentication of other passer, and thereby the authentication of the relevant other passer erroneously succeeds, it is possible to maintain the reliability of the feature data for authentication stored in the feature data memory 31. In addition, when the authentication of a passer has succeeded, since it is prevented that the feature data for authentication coincident with the feature data acquired by the second facial feature extracting portion 23 becomes an object of the judgment as to whether or not to coincide with the feature data acquired from the second image G2 obtained by imaging the other passer, it is possible to prevent that the useless judging processing is performed, and thereby it is possible to achieve the improvement of the authentication speed of a passer and saving of the resource.

In addition, the second passer authenticating portion 24 erases the feature data for authentication wherein a prescribed time has passed since it is stored in the feature data memory 31, out of the feature data for authentication stored in the feature data memory 31, from the feature data memory 31. In the present embodiment, the second passer authenticating portion 24 erases the feature data for authentication, wherein the time indicated by the time data that has been stored in association with the relevant feature data for authentication is not present between the present time and a time going back from the present time by a prescribed time, out of the feature data for authentication stored in the feature data memory 31, from the feature data memory 31.

By this means, since the feature data for authentication having a low possibility to become an object of the judgment whether or not to coincide with the feature data acquired by the second facial feature extracting portion 23 can be erased, it is possible to maintain the reliability of the feature data for authentication stored in the feature data memory 31. In addition at the time of the judgment as to whether or not to coincide with the feature data acquired by the second facial feature extracting portion 23, it is possible to prevent that the useless judging processing is performed, and thereby it is possible to achieve the improvement of the authentication speed of a passer and saving of the resource.

In addition, the second passer authenticating portion 24 erases the feature data for authentication used in the authentication of a passer in an authenticating device other than the predetermined first authenticating device 10, out of the feature data for authentication stored in the feature data memory 31, from the feature date memory 31. In the present embodiment, when an authenticating device which the device data stored in association with the relevant feature data for authentication, out of the feature data for authentication stored in the feature data memory 31, is not the predetermined first authenticating device 10, the second passer authenticating portion 24 erases the relevant feature data for authentication from the feature data memory 31. By this means, since it is prevented that the authentication in the authenticating device other than the predetermined first authenticating device 10 has succeeded, and the second authentication processing of a passer is executed using the feature data for authentication stored in the feature data memory 31, it is possible to maintain the reliability of the feature data for authentication stored in the feature data memory 31.

In addition, the second passer authenticating portion 24 may set the second threshold value used for comparing the similarity between the feature data for authentication wherein a prescribed time has passed since it is stored in the feature data memory 31, and the feature data acquired by the second facial feature extracting portion 23 higher than the second threshold value used for comparing the similarity between the feature data for authentication wherein a prescribed time has not passed since it is stored in the feature data memory 31, and the feature data acquired by the second facial feature extracting portion 23. By this means, it is possible to reduce the possibility that the authentication of a passer succeeds, using the feature data for authentication having low reliability wherein a prescribed time has passed since it is stored in the feature data memory 31, it is possible to improve the authentication accuracy of a passer.

When the authentication of a passer by the second passer authenticating portion 24 has succeeded (step S604: Yes), the second output portion 25 makes a message for notifying that the authentication of a passer has succeeded to be displayed on the second display portion 26 (refer to FIG. 1 and FIG. 7), so that a manager can watch the message (step S605). On the other hand, when the authentication of a passer by the second passer authenticating portion 24 has failed (step S604: No), the second output portion 25 makes a message for notifying that the authentication of a passer has failed to be displayed on the second display portion 26 (refer to FIG. 1 and FIG. 7), so as to notify a manager of the message (step S606).

FIG. 7 is a diagram showing a display example of the authentication result of a passer in the second authenticating device which the information processing system according the first embodiment has. In the present embodiment, when the authentication of a passer by the second passer authenticating portion 24 has succeeded, the second output portion 25 makes a third image plane D3 to be displayed on the second display portion 26, as a manager monitor, as shown in FIG. 7. Here, the third image plane D3 includes a message 701 for notifying success of the authentication of a passer, an input image 702 that is the facial image contained in the second image G2, referred image 703 - 705 that are facial images (in the present embodiment, facial images based on the image data contained in the discrimination data stored in association with the relevant feature data for authentication) of the acquisition source of the relevant feature data for authentication of a prescribed number (three, in the present embodiment), selected in the descending order from the feature data for authentication with high similarity with the feature data acquired by the second facial feature extracting portion 23. At this time, the second output portion 25 makes the referred image 703 of the acquisition source of the feature data for authentication having the highest similarity, out of the feature data for authentication with high similarity with the feature data acquired by the second facial feature extracting portion 23, to be displayed in a display mode different from the other referred images 704, 705, by blinking the referred image 703, for example.

In the present embodiment, the second output portion 25 makes the third image plane D3 to be displayed on the second display portion 26, to notify a manager of the authentication result of a passer by the second passer authenticating portion 24, but without being limited to this, for example, the second output portion 25 may notify the authentication result of a passer, in such a manner that a sound is emitted from a speaker not shown provided in the second authenticating device 20, or the authentication result of a passer is transmitted to an upper device (a terminal which a manager of the information processing system 1 operates) of the second authenticating device 20 by wired or wireless communication. In addition, when the authentication of a passer by the second passer authenticating portion 24 has succeeded, the second output portion 25 may notify the authentication result of a passer, in such a manner that an entrance gate provided at the second position P2 is opened, or a lock of a door provided at the second position P2 is opened. In addition, when the authentication of a passer by the second passer authenticating portion 24 has failed, the second output portion 25 transmits the image data of the facial image contained in the second image G2 obtained by imaging by the second imaging portion 21 to an upper device, as image data of facial image of a dishonest passer, and may make the image data to be stored in the relevant upper device.

In this manner, according to the information processing system 1 of the first embodiment, when a passer passes through the first position P1, and then the passer is exchanged to another passer till the passer passes through the second position P2, even if the authentication of the passer by the first authentication processing has succeeded, the authentication of the passer by the second authentication processing fails, it is possible to prevent the exchange of passers.

In addition, according to the information processing system 1 of the first embodiment, since it becomes unnecessary to retrieve the feature data to be used in the first, second authentication processings from the database provided in an upper device such as the server 30, or change the authentication of a passer into a simple one for shortening the time required for the first, second authentication processings, it is possible to effectively perform the authentication of a passer, while preventing the reduction of accuracy of the authentication of a passer.

(Second embodiment) The present embodiment is an example which can execute a third authentication processing, in place of the second authentication processing, when the biological data is read from a medium held by a passer passing through the second position. Here, third authentication processing authenticates a passer, using the biological data read by a medium held by the passer passing through the second position, and the biological data acquired from the second image obtained by imaging the passer passing through the second position by the imaging portion. In the following description, regarding the same portions as the first embodiment, the description thereof will be omitted.

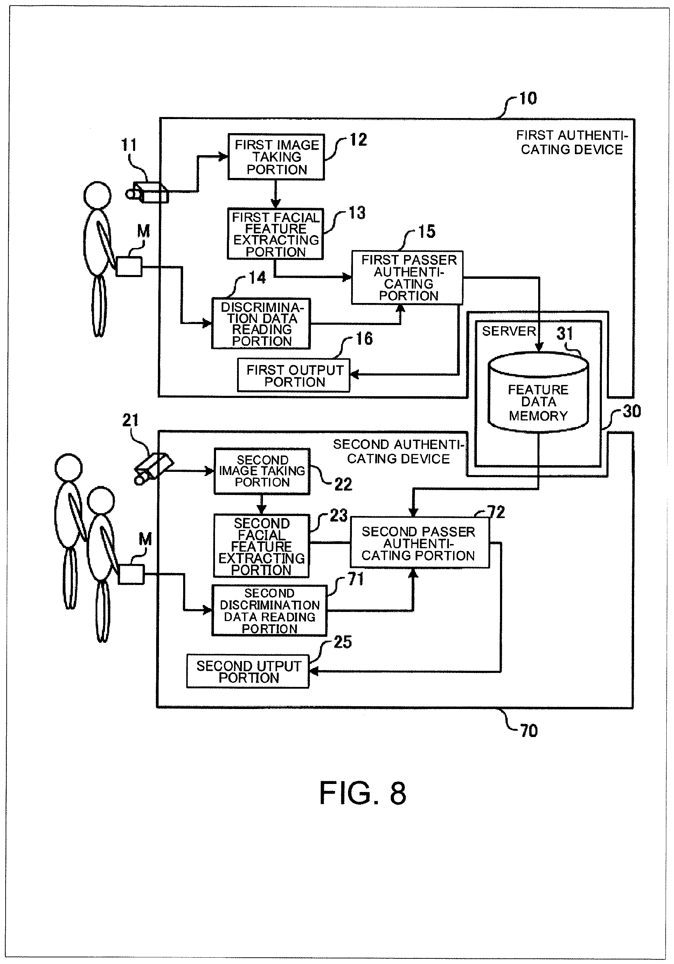

FIG. 8 is a block diagram showing a functional configuration of an information processing system according to a second embodiment. In the present embodiment, as shown in FIG. 8, a second authenticating device 70, is provided with the second imaging portion 21, the second image taking portion 22, the second facial feature extracting portion 23 and the second output portion 25, and in addition, a second discrimination data reading portion 71 (an example of a second reading portion) which is composed of a card reader and so on, and is provided so that feature data (an example of fifth biological data) can be read from a medium M held by a passer passing through the second position P2, and a second passer authenticating portion 72 which can execute, in place of the second authentication processing, a third authentication processing to authenticate a passer, using the feature data acquired by the second facial feature extracting portion 23, and the feature data read by the second discrimination data reading portion 71.

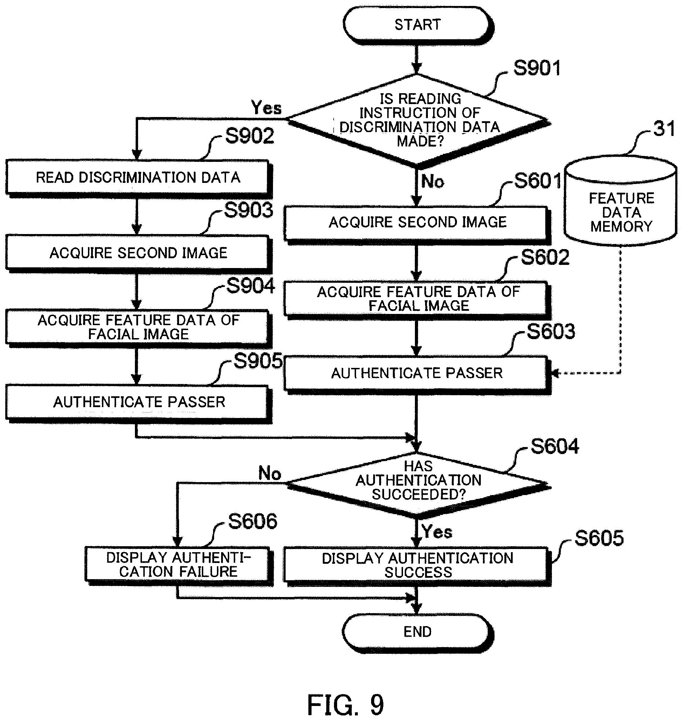

FIG. 9 is a flow chart showing a flow of an authentication processing of a passer in the second authentication device which the information processing system according to the second embodiment has. The second discrimination data reading portion 71 judges whether or not reading of the discrimination data has been instructed by an operation portion (a numeric keypad, or a touch panel, for example) not shown which the second authenticating device 70 has (step S901). When the reading of the discrimination data has not been instructed (step S901: No), the second authenticating device 70 executes the same processings as the steps S601 - the step S606 shown in FIG. 6.

On the other hand, when the reading of the discrimination data has been instructed (step S901: Yes), the second discrimination data reading portion 71 reads feature data and discrimination data which makes the passer discriminable, from a medium M held by a passer passing through the second position P2, in the same manner as the discrimination data reading portion 14 which the first authenticating device 10 has (step S902).

When the discrimination data is read by the second discrimination data reading portion 71, the second image taking portion 22 acquires the second image G2 obtained by imaging by the second imaging portion 21, in the same manner as the step S601 shown in FIG. 6 (step S903). In addition, the second facial feature extracting portion 23 acquires feature data of a facial image of the passer contained in the relevant second image G2 from the second image G2, in the same manner as the step S602 shown in FIG. 6 (step S904).

The second passer authenticating portion 72 performs a third authentication processing to authenticate a passer, in place of the second authentication processing, using the feature data read by the second discrimination data reading portion 71, and the feature data acquired by the second facial data extracting portion 23 (step S905). In the present embodiment, the second passer authenticating portion 72 calculates a similarity between the feature data acquired by the second facial feature extracting portion 23, and the feature data read by the second discrimination data reading portion 71. And when the calculated similarity exceeds a prescribed third threshold value, the second passer authenticating portion 72 judges to have succeeded in the authentication of a passer (step S604: Yes). On the other hand, when the calculated similarity is not more than the third threshold value, the second passer authenticating portion 72 judged to have failed in the authentication of a passer (step S604: No). It is preferable that the third threshold value is set to a value higher than the first threshold value used in the authentication in the first authenticating device 10, to increase the authentication accuracy of a passer.

In this manner, according to the information processing system according to the second embodiment, when the second discrimination data reading portion 71 is provided, even if the feature data for authentication which is similar to the feature data acquired by the second facial feature extracting portion 23 is not stored in the feature data memory 31, the second authentication processing can be executed, and accordingly, even when a special passer such as a celebrity is exempted from the first authentication processing, and reaches the second position P2, without passing through the first position P1, it is possible to execute the second authentication processing to the special passer, in the same manner as the usual passer other than the relevant special passer. In addition, in the same manner as the above-described first embodiment, when a passer passes through the first position P1, and then the passer is exchanged to another passer till the passer passes through the second position P2, even if the authentication of the passer by the first authentication processing has succeeded, the authentication of the passer by the second authentication processing fails, it is possible to prevent the exchange of passers.

Further, the program to be executed in the first authenticating device 10 and the second authenticating device 20 (70) of the present embodiment is provided, with being previously incorporated in a ROM (Read Only Memory) and so on.

In addition, the program to be executed in the first authenticating device 10 and the second authenticating device 20 (70) of the present embodiment may be configured such that the program is provided with being recorded in a computer readable recording medium, such as a CD-ROM, a flexible disk (FD), a CD-R, a DVD (Digital Versatile Disk) in a file form of an installable format or an executable format.

Further, the program to be executed in the first authenticating device 10 and the second authenticating device 20 (70) of the present embodiment may be configured such that the program is stored on a computer connected to a network such as Internet, and is provided by being downloaded through the network. In addition, the program to be executed in the first authenticating device 10 and the second authenticating device 20 (70) of the present embodiment may be configured such that the program is provided or distributed through a network such as Internet.

The program to be executed in the first authenticating device 10 of the present embodiment has a modular configuration containing the above-described respective portions (the first image taking portion 12, the first facial feature extracting portion 13, the first passer authenticating portion 15, the first output portion 16), and as an actual hardware, a CPU (Central Processing Unit) reads and executes the program from the above-described ROM, and thereby the above-described respective portions are loaded on a main storage device, and accordingly, the first image taking portion 12, the first facial feature extracting portion 13, the first passer authenticating portion 15, the first output portion 16 are to be generated on the main storage device.

In addition, the program to be executed in the second authenticating device 20 (70) of the present embodiment has a modular configuration containing the above-described respective portions (the second image taking portion 22, the second facial feature extracting portion 23, the second passer authenticating portion 24 (72), the second output portion 25), and as an actual hardware, a CPU reads and executes the program from the above-described ROM, and thereby the above-described respective portions are loaded on a main storage device, and accordingly, the second image taking portion 22, the second facial feature extracting portion 23, the second passer authenticating portion 24 (72), the second output portion 25 are to be generated on the main storage device.

In addition, the information processing system 1 of the present embodiment has a configuration that the first authenticating device 10 has the first image taking portion 12, the first facial feature extracting portion 13, the first passer authenticating portion 15 and the first output portion 16, and the second authenticating device 20 (70) has the second image taking portion 22, the second facial feature extracting portion 23, the second passer authenticating portion 24 (72) and the second output portion 25, but any device in the information processing system 1 has only to have the above-described respective portions. For example, one device such as the server 30 may be provided with all of the above-described respective portions, or the above described respective portions may be separately provided in any of the three or more devices in the information processing system 1.

(Third embodiment) Hereinafter, a person authenticating method and a person authenticating system according to a third embodiment will be described, using the attached drawings. In addition, a person authenticating method is included in an information processing method, and a person authenticating system is included in an information processing system.

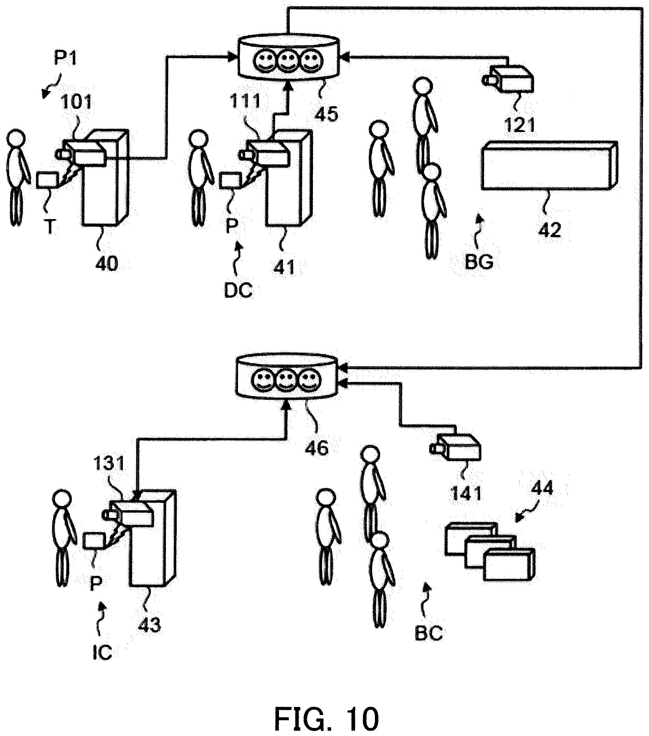

FIG. 10 is a diagram showing a configuration of an immigration control system to which a person authenticating system according to a third embodiment is applied. The immigration control system according to the present embodiment, is a system, as shown in FIG. 10, which adjusts the imaging condition of a person in the authentication processing at the destination of the relevant person, in accordance with the imaging condition of the person at the time of departure, and can improve the accuracy of the authentication processing of the relevant person at the destination.

Here, an example in which the information processing system 1, as a person authenticating method and a person authenticating system according to the present embodiment is applied to an immigration control system will be described, but if it is a system (such as an access control system and a video monitoring system, for example) which executes an authentication processing when passers pass through, such as a public facility, an important facility, an office building, a commercial facility, a person authenticating method and a person authenticating system according to the present embodiment can be applied to such a system, in the same manner as the immigration control system 1.

The immigration control system according to the present embodiment is a system, as shown in FIG. 10, which effectively performs an authentication processing of a person in a facility such as an airport, by combining the 1:1 collation in a departure examination counter DC or an immigration examination counter IC, and the 1:N collation in a boarding gate BG or a baggage pick-up counter BC.

Here, the 1:1 collation is an authentication processing which is executed using discrimination data and biological data. Here, the discrimination data is data which has been read from a passport P (an example of a medium) held by a person who passes through the departure examination counter DC or the immigration examination counter IC, before the person reaches the boarding gate BG or the baggage pick-up corner BC, and which makes the relevant person discriminable. And, the biological data is data acquired from an image obtained by imaging the relevant person. The 1:N collation is an authentication processing which is executed using the biological data acquired from an image obtained by imaging a person passing through the boarding gate BG or the baggage pick-up corner BC, and a plurality of the previously stored biological data.

Specifically, the immigration control system according to the present embodiment has a boarding guide device 40, a first authenticating device 41, a second authenticating device 42, a third authenticating device 43, a fourth authenticating device 44, a first memory 45, a second memory 46.

The boarding guide device 40 is installed at a check-in counter as the first position P1, and reads destination data from an air ticket T (an example of a medium) held by a person to board an airplane or the like, reads discrimination data from a passport P held by the relevant person, and performs acquisition and so on of biological data from an image obtained by imaging by a camera 101 provided so that the relevant person can be imaged. Here, the destination data is data indicating the destination of the person passing through the check-in counter, as the first position P1. And the board guide device 40 stores the destination data read from the air ticket T, the discrimination data read from the passport P, and the biological data acquired form an image obtained by imaging by the camera 101, in the first memory 45, in association with each other.

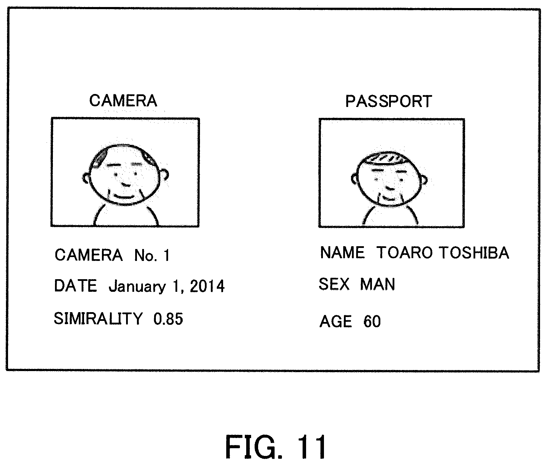

The first authenticating device 41 is installed at the departure examination counter DC, and reads discrimination data (an example of first discrimination data) from a passport P held by a person passing through the departure examination counter DC (an example of a first position), and performs acquisition and so on of biological data (an example of first biological data) from an image (an example of a first image) obtained by imaging by a camera 111 (an example of a first imaging portion) provided so that the relevant person can be imaged. Next, the first authenticating device 41 executes an authentication processing (hereinafter, called a first authentication processing) of the relevant person, using the discrimination data read from a passport P held by a person who departs, and the biological data acquired from an image obtained by imaging by the camera 111. And, when the first authentication processing has succeeded, the first authenticating device 41 stores the discrimination data and the biological data used in the relevant first authentication processing in the first memory 45, in association with device discrimination data to make the first authenticating device 41 discriminable. In addition, when the first authentication processing has succeeded, the first authenticating device 41 stores the imaging condition of the camera 111 in the second memory 46 (an example of a storage device), in association with the discrimination data used in the relevant first authentication processing. As shown in FIG. 11, a display for a manager is provided, on which a facial image of a person photographed by the camera 111, a camera number as a photographing place (what gate?), and a photographing date, are displayed on the left side, and a facial image of a person stored in the passport as discrimination data from the passport P held by a passing person, and full name, sex, age of the person are displayed on the left side, in association with each other. The result of the above-described first authentication processing, that is a similarity obtained by comparing the photographed facial image and the facial image stored in the passport, is displayed below the facial image photographed by the camera 111. When the similarity is low, an alarm is automatically generated to the passing person.

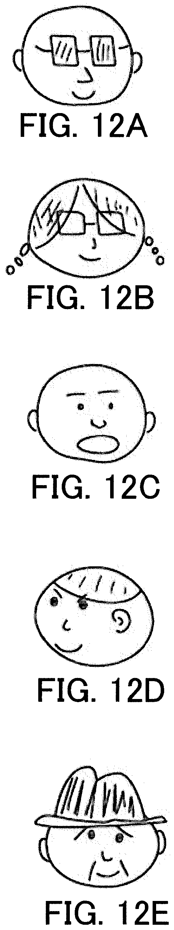

In addition, there are cases inappropriate as a photographed image, as shown in FIG. 12A - FIG. 12E, for a facial image of a person stored in a passport P as discrimination data. For example, as shown in FIG. 12A, a face is hidden with sunglasses. As shown in FIG. 12B, a face is hidden with hair. As shown in FIG. 12C, the expression is changed by opening a mouth. As shown in FIG. 12D, a face faces not forward, but faces the side. As shown in FIG. 12E, a face is hidden with a hat. When the above-described matters are detected, the re-photographing is instructed to the passers, by the display portions 105, 116 or 121, and so on. Or, an alarm is generated on the display portion for a manager. Further, though not shown in the drawing, when the illumination is too light or too dark at the time of photographing, or when a compression noise has been contained at the time of coding an image, an alarm is generated on the display portion for a manager, to adjust so as to make appropriate the illumination at the time of photographing, and thereby the camera 101, 111, or 121 is adjusted so that the compression noise is not contained.

The second authenticating device 42 is installed at the boarding gate BG, and performs acquisition and so on of biological data from an image obtained by imaging by the camera 121 which is provided so that a person passing through the relevant boarding gate BG can be imaged. As a rule, the second authenticating device 42 shall not read discrimination data from a passport P held by a person passing through the boarding gate BG. Next, the second authenticating device 42 executes an authentication processing of the person passing through the boarding gate BG, using the acquired biological data and the biological data stored in the first memory 45. By this means, since in the final authentication of the person at the time of the departure of the relevant person, the authentication of the relevant person can be performed, without reading discrimination data from the passport P, even in a case in which a lot of persons pass through the boarding gate BG, it is possible to execute the authentication processing of a person without generating delay.

And, when the biological data acquired from an image obtained by imaging a person passing through the boarding gate BG coincides with any of the biological data stored in the first memory 45, assuming that the authentication processing of the person passing through the boarding gate BG has succeeded, the second authenticating device 42 opens the boarding gate BG or opens a key of a door instated at the boarding gate BG, to permit passing of the boarding gate BG. On the other hand, when the biological data acquired from the image obtained by imaging the person passing through the boarding gate BG does not coincide with any of the biological data stored in the first memory 45, assuming that the authentication processing of the person passing through the boarding gate BG has failed, the second authenticating device 42 does not open the boarding gate BG or does not open the key of the door instated at the boarding gate BG, to prohibit passing of the boarding gate BG.

In the present embodiment, when a gate or a key of a door so as to permit or prohibit the passing through the boarding gate BG is not installed, the second authenticating device 42 performs permission or prohibition of the passing through the boarding gate BG, with the following processing. When having succeeded in the authentication processing of a person passing through the boarding gate BG, the second authenticating device 42 stores the data indicating that the person has normally passed through the boarding gate BG, in association with the biological data which has coincided with the biological data acquired from the image obtained by imaging the person passing through the boarding gate BG, out of the biological data stored in the first memory 45. On the other hand, when having failed in the authentication processing of a person passing through the boarding gate BG, the second authenticating device 42 makes the display portion provided in the second authenticating device 42 display alarm data so as to notify that the authentication has failed, or transmits alarm data so as to notify that the authentication has failed to an external terminal, or stores the image obtained by imaging the person having passed through the boarding gate BG.

The third authenticating device 43 is installed at the immigration examination counter IC (an example of a second position), and reads discrimination data (an example of second discrimination data) from a passport P held by a person passing through the immigration examination counter IC. Next, the third authenticating device 43 reads the imaging condition which has been stored in association with the discrimination data coincident with the discrimination data read from the passport P. Next, the third authenticating device 43 adjusts imaging condition of a camera 131 (an example of a second imaging portion) which is provided so that a person passing through the immigration examination counter IC can be imaged, in accordance with the read imaging condition.

Further, the third authenticating device 43 acquires biological data (an example of second biological data) from an image (an example of a second image) obtained by imaging by the camera 131 with the imaging condition adjusted. And, the third authenticating device 43 executes an authentication processing (hereinafter, called a second authentication processing) of the relevant person, using the discrimination data read from the passport P, and the biological data acquired from the image obtained by imaging by the camera 131. By this means, since the third authenticating device 43 can execute the second authentication processing using the biological data acquired from the image obtained by imaging by the camera 131 under the same imaging condition as the imaging condition of the camera 111, when the first authentication processing has succeeded at the departure examination counter DC, it is possible to improve the authentication accuracy of a person at the immigration examination counter IC. And, when the second authentication processing has succeeded, the third authenticating device 43 stores the discrimination data and the biological data used in the second authentication processing in in the second memory 46, in association with each other.

The fourth authenticating device 44 is installed at the baggage pick-up corner BC, and performs acquisition and so on of biological data from an image obtained by imaging by a camera 141 which is provided so that a person passing through the relevant baggage pick-up corner BC can be imaged. Next, the fourth authenticating device 44 executes an authentication processing of the person passing through the baggage pick-up corner BC, using the acquired biological data and the biological data stored in the second memory 46. By this means, since in the final authentication of the person at the time of the immigration, the authentication of the relevant person can be performed, without reading discrimination data from the passport P, even in a case in which a lot of persons pass through the baggage pick-up corner BC, it is possible to execute the authentication processing of the person without generating delay.

And, when the biological data acquired from the image obtained by imaging the person passing through the baggage pick-up corner BC coincides with any of the biological data stored in the second memory 46, assuming that the authentication processing of the person passing through the baggage pick-up corner BC has succeeded, the fourth authenticating device 44 permits the passing through the baggage pick-up corner BC. On the other hand, when the biological data acquired from the image obtained by imaging the person passing through the baggage pick-up corner BC does not coincide with any of the biological data stored in the second memory 46, assuming that the authentication processing of the person passing through the baggage pick-up corner BC has failed, the fourth authenticating device 44 prohibits the passing through the baggage pick-up corner BC.

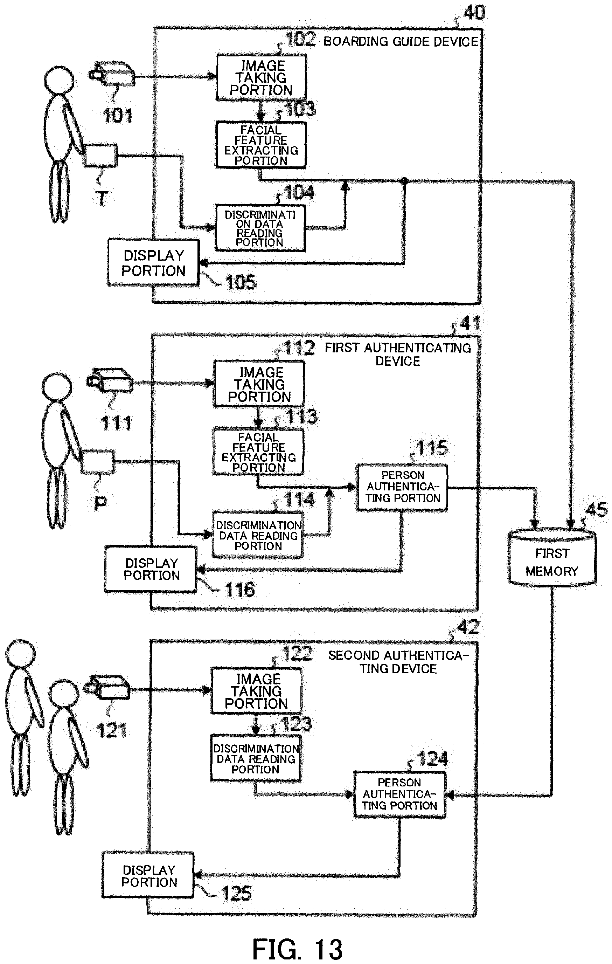

Next, a functional configuration of the boarding guide device 40, the first authenticating device 41, and the second authenticating device 42 which the immigration control system according to the present embodiment has, will be described, using FIG. 13. FIG. 13 is a diagram showing a functional configuration of the boarding guide device 40, the first authenticating device 41, and the second authenticating device 42 which the immigration control system according to the present embodiment has.

As shown in FIG. 13, the boarding guide device 40 has an image taking portion 102 to acquire an image obtained by imaging by the camera 101, a facial feature extracting portion 103 to extract feature data of a facial image in the image acquired by the relevant image taking portion 102, a discrimination data reading portion 104 which reads destination data from an air ticket T held by a person passing through the check-in counter P1, and the display portion 105 which can display the reading result data of the designation data from the air ticket T.

As shown in FIG. 13, the first authenticating device 41 has an image taking portion 112 to acquire an image obtained by imaging by the camera 111, a facial feature extracting portion 113 to extract (acquire) feature data (an example of biological data) of a facial image in the relevant image, from the image acquired by the relevant image taking portion 112, a discrimination data reading portion 114 to read the discrimination data from a passport P held by a person passing through the departure examination counter DC, a person authenticating portion 115 which performs a first authentication processing of the person passing through the departure examination counter DC, using the feature data extracted by the facial feature extracting portion 113 and the discrimination data read by the discrimination data reading portion 114, and when the relevant first authentication processing has succeeded, stores the discrimination data and the feature data used in the first authentication processing in the first memory 45 in association with the device discrimination data, and the display portion 105 which can display the result of the first authentication processing by the relevant person authenticating portion 115.

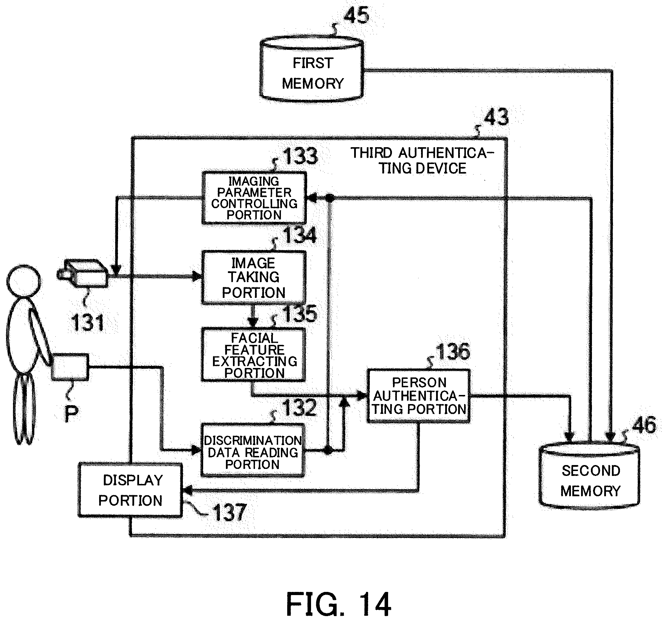

In the present embodiment, when the first authentication processing of the person passing through the departure examination counter DC has succeeded, the person authenticating portion 115 stores the imaging condition (an example of a first imaging condition) of the camera 111 with which the image used in the relevant first authentication processing is obtained, as an imaging condition (an example of a second imaging condition) of a camera 131 shown in FIG. 14, in the second memory 46 shown in FIG. 14, in association with the discrimination data used in the relevant first authentication processing. In the present embodiment, the person authenticating portion 115 stores the imaging condition of the camera 111 in the second memory 46, but if the imaging condition of the camera 111 is stored in a memory to which the third authenticating device 43 shown in FIG. 14 can access, without being limited to this, the imaging condition of the camera 111 may be stored in the first memory 45.

As shown in FIG. 13, the second authenticating device 42 has an image taking portion 122 to acquire an image obtained by imaging by the camera 121, a facial feature extracting portion 123 to extract feature data of a facial image in the image acquired by the relevant image taking portion 122, a person retrieval portion 124 which executes an authentication processing of a person passing through the boarding gate BG, using the feature data stored in the first memory 45 and the feature data extracted by the facial feature extracting portion 123, and the display portion 125 which can display the authentication result of the person by the relevant person retrieval portion 124.

In the present embodiment, when the feature data extracted by the facial feature extracting portion 123 coincides with any of the feature data stored in the first memory 45, judging that the authentication processing of the person passing through the boarding gate BG has succeeded, the person retrieval portion 124 permits the passing of the boarding gate BG. On the other hand, when the feature data extracted by the facial feature extracting portion 123 does not coincide with any of the feature data stored in the first memory 45, judging that the authentication processing of the person passing through the boarding gate BG has failed, the person retrieval portion 124 prohibits the passing of the boarding gate BG.

In addition, in the present embodiment, even when a person to whom the authentication processing in the first authenticating device 41 has not been executed passes through the boarding gate BG, the second authenticating device 42 may have a reading portion not shown which can read discrimination data from a passport P held by the relevant person, so that the relevant person can pass through the boarding gate BG. In this case, the person retrieval portion 124 of the second authenticating device 42 executes the authentication processing of the person passing through the boarding gate BG, using the discrimination data read by the reading portion not shown which the second authenticating device 42 has, and the feature data extracted by the facial feature extracting portion 123.

Next, a functional configuration of the third authenticating device 43 which the immigration control system according to the present embodiment has, will be described using FIG. 14. FIG. 14 is a diagram showing a functional configuration of the third authenticating device which the immigration control system according to the present embodiment has.

As shown in FIG. 14, the third authenticating device 43 has a discrimination data reading portion 132 to read discrimination data from a passport P held by a person passing through the immigration examination counter IC, an imaging parameter controlling portion 133 which reads the imaging condition stored in association with the discrimination data coincident with the discrimination data read by the discrimination data reading portion 132, from the second memory 46, and adjusts the imaging condition of the camera 131 in accordance with the relevant read imaging condition, an image taking portion 134 to acquire an image obtained by imaging by the camera 131 with the imaging condition adjusted, a facial feature extracting portion 135 to extract (acquire) feature data (an example of biological data) of a facial image in the relevant image, from the image acquired by the relevant image taking portion 134, a person authenticating portion 136 which executes the second authentication processing of a person passing through the immigration examination counter IC, using the feature data extracted by the relevant facial feature extracting portion 135, and the discrimination data read by the discrimination reading portion 132, and when the relevant second authentication processing has succeeded, stores the discrimination data and the feature data used in the relevant second authentication processing in the second memory 46 in association with each other, and a display portion 137 to display the result of the second authentication processing by the relevant person authenticating portion 136.

In the present embodiment, the imaging parameter controlling portion 133 adjusts the imaging condition of the camera 131 so as to approach to the imaging condition read from the second memory 46. By this means, since the variation of the imaging condition of the camera 111 can be suppressed, when the imaging condition of the camera 111 in the case of having succeeded in the first authentication processing in the immigration examination counter DC is taken as a reference, it is possible to improve the robustness of the authentication accuracy in the immigration examination center IC.

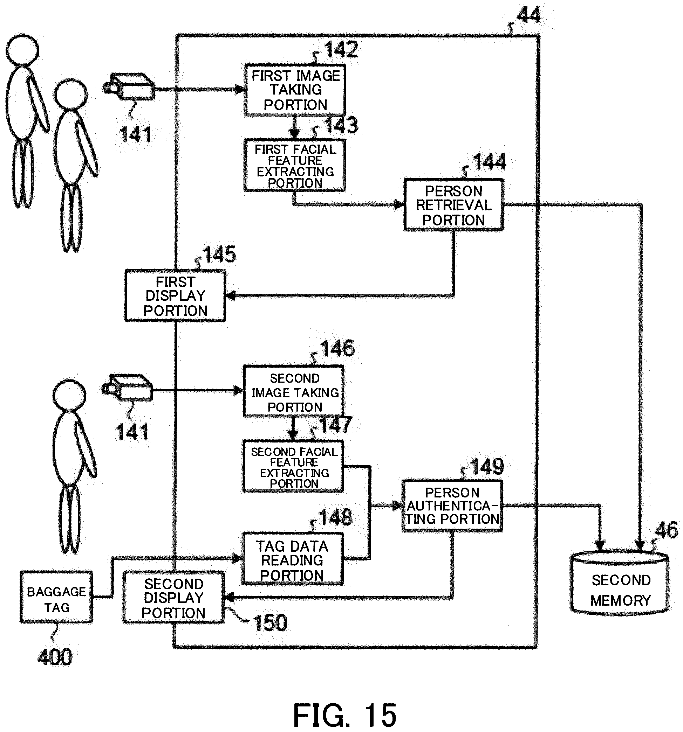

Next, a functional configuration of the fourth authenticating device 44 which the immigration control system according to the present embodiment has, will be described using FIG. 15. FIG. 15 is a diagram showing a functional configuration of the fourth authenticating device which the immigration control system according to the present embodiment has.

As shown in FIG. 15, the fourth authenticating device 44 has a first image taking portion 142 which acquires an image obtained by imaging by a camera 141 provided so that a person passing through the baggage pick-up corner BC can be imaged, a first facial feature extracting portion 143 to extract feature data of a facial image in the image acquired by the relevant first image taking portion 142, a person retrieval portion 144 which executes the authentication processing of the person passing through the baggage pick-up corner BC, using the feature data stored in the second memory 46 and the feature data extracted by the first facial feature extracting portion 143, a first display portion 145 which can display the result of the authentication processing by the relevant person retrieval portion 144.

In addition, as shown in FIG. 15, the fourth authenticating device 44 has a second image taking portion 146 which acquires an image obtained by imaging by a camera 141 provided so that a person to receive a baggage in the baggage pick-up corner BC can be imaged, a second facial feature extracting portion 147 to extract feature data of a facial image in the image acquired by the relevant second image taking portion 146, a tag data reading portion 148 to read tag data that is data which makes an owner of the baggage discriminable, from a baggage tag 400 which a person passing through the baggage pick-up corner BC has, a person authenticating portion 149 which executes the authentication processing of the person who has received the baggage in the baggage pick-up corner BC, using the feature data which has been stored in association with the discrimination data coincident with the tag data read by the tag data reading portion 148 in the second memory 46, and the feature data extracted by the second facial feature extracting portion 147, and a second display portion 150 which can display the result of the authentication processing by the relevant person authenticating portion 149.

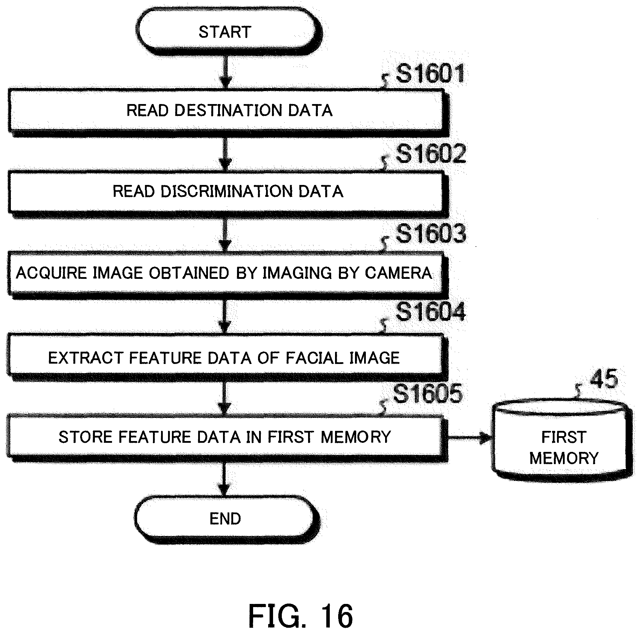

Next, an acquisition processing of biological data by the boarding guide device 40 which the immigration control system according to the present embodiment has, will be described using FIG. 16. Fig. 16 is a flow chart showing a flow of an acquisition processing of biological data by the boarding guide device 40 which the immigration control system according to the present embodiment has.

To begin with, the discrimination data reading portion 104 reads, from an air ticket T held by a person passing through the check-in counter P1, destination data indicating the destination of the relevant person (step S1601). Further, the discrimination data reading portion 104 reads, from an IC chip embedded in a passport P held by the person passing through the check-in counter P1, feature data of a facial image of a nominal person of the relevant passport P, as discrimination data (step S1602).

In the present embodiment, the discrimination data reading portion 104 is composed of a card reader, for example, and can read the destination data from an air ticket T, and discrimination data from an IC chip embedded in a passport P. In the present embodiment, the discrimination data reading portion 104 reads feature data of a facial image of a nominal person of the passport P as discrimination data, but without being limited to this, one which reads discrimination data which makes a nominal person of a passport P discriminable may be used. For example, an ID number so as to uniquely identify a nominal person of a passport P, biological data (such as a facial image, a fingerprint, and an iris) of a nominal person of a passport P, personal data (such as, full name, birth date, sex, age, belonging, carrier) of a nominal person of a passport P may be read, as the discrimination data.

In the present embodiment, the discrimination data reading portion 104 reads various data such as destination data and discrimination data, from an air ticket T or a passport P, but without being limited to this, it is possible to configure the discrimination data reading portion 104 by an input portion, such as a numeric keyboard, and a touch panel, which can input various data such as destination data and discrimination data. In this case, a user (such as a person passing through the check-in counter P1) of the boarding guide device 40 operates the discrimination data reading portion 104 functioning as an input portion, to input destination data and discrimination data.

In the present embodiment, an example is described in which the discrimination data reading portion 104 reads discrimination data (such as discrimination data stored by an external device other than the immigration control system) from an IC chip embedded in a passport P, but without being limited to this, one which reads discrimination data from a passport P may be used. For example, it is possible that the discrimination data reading portion 104 reads a facial image printed on a passport P, and reads feature data of the read facial image as discrimination data. A reading method of feature data from a facial image is the same as an extraction method of feature data by the facial feature extracting portion 103 described later.

When the destination data and the discrimination data are read, the image taking portion 102 controls the camera 101, to image a person passing through the check-in counter P1. Then the image taking portion 102 acquires the image obtained by imaging by the camera 101 (step S1603). Here, the camera is composed of a video camera, for example, and is provided so that a person passing through the check-in counter P1 can be imaged. In the present embodiment, the camera 101 is provided so that a face of a person passing through the check-in counter P1 can be imaged. And the camera 101 digitizes an image obtained by imaging the person passing through the check-in counter P1 by an A/D converter not shown, and outputs the digitized image.

Next, the facial feature extracting portion 103 detects a facial image from the image acquired by the image taking portion 102, and extracts feature data of the relevant detected facial image (step S1604). In the present embodiment, while moving a previously set template for face detection in the image acquired by the image taking portion 102, the facial feature extracting portion 103 obtains a correlation value between the acquired image and the template. And the facial feature extracting portion 103 detects a region in which the correlation value with the template is the highest in the acquired image, as a facial image.

In the present embodiment, the facial feature extracting portion 103 detects a facial image using a previously set template for face detection from the image acquired by the image taking portion 102, but without being limited to this, it is also possible to detect a facial image from the image acquired by the image taking portion 102, using a well-known eigenspace method or subspace method, for example. In addition, the facial feature extracting portion 103 detects a plurality of facial images of a person passing through the check-in counter P1, from a plurality of the images acquired by the image taking portion 102, using the method described in Japanese Patent No. 5355446 and so on. Next, the facial feature extracting portion 103 can also select a facial image necessary for extracting feature data from the plurality of detected images.

Next, the facial feature extracting portion 103 detects parts of a face, such as eyes and a nose, from the detected facial image, using the method described in Japanese Patent No. 3,279,913 and so on, for example. Then the facial feature extracting portion 103 digitizes and outputs feature data which makes a person passing through the check-in counter P1 discriminable, from the detected part of a face. Specifically, the facial feature extracting portion 103 segments a region with a prescribed size and a prescribed shape, from the facial image detected from the image acquired by the image taking portion 102, based on the position of the detected part of a face. And the facial feature extracting portion 103 extracts contrast data of the segmented region, as feature data. The facial feature extracting portion 103 sets the contrast data of the region having m x n pixels segmented from the facial image as feature vector (feature data) of m x n dimensions, using the subspace method described in Japanese Patent No. 4087953 and so on, for example.

Next, the facial feature extracting portion 103 stores the extracted feature data in the first memory 45, in association with the destination data and discrimination data read by the discrimination data reading portion 104 (step S1605).

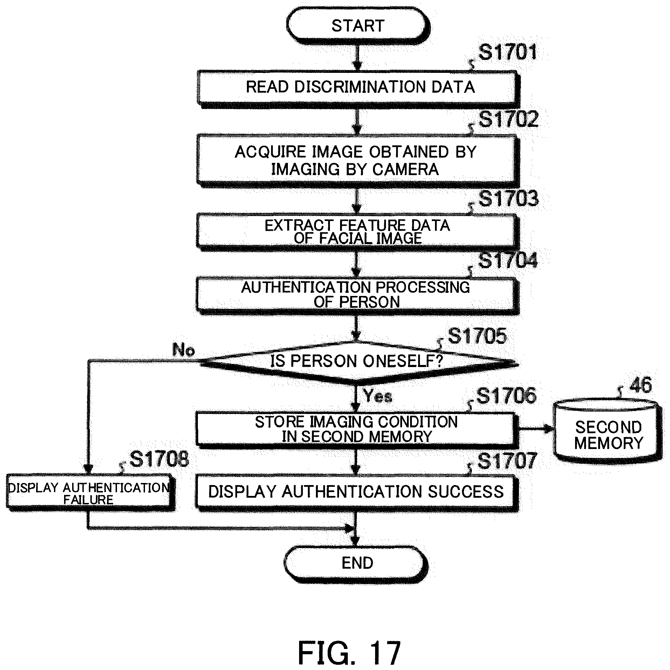

Next, an authentication processing by the first authenticating device 41 which the immigration control system according to the present embodiment has, will be described using FIG. 17. FIG. 17 is a flow chart showing a flow of an authentication processing by the first authenticating device which the immigration control system according to the present embodiment has.

To begin with, the discrimination reading portion 114 reads, from a passport P held by a person passing through the departure examination counter DC, discrimination data of a nominal person of the passport P (step S1701). A reading method of discrimination data from a passport P by the discrimination data reading portion 114 is the same as the reading method of discrimination data from a passport P by the discrimination data reading portion 104 which the boarding guide device 40 has.

When the discrimination data is read, the image taking portion 112 controls the camera 111, to image a person passing through the departure examination counter DC. And the image taking portion 112 acquires an image obtained by imaging by the camera 111 (step S1702). Here, the camera 111 is composed of a video camera, for example, and is provided so that a person passing through the departure examination counter DC can be imaged. In the present embodiment, the camera 111 is provided so that a face of a person passing through the departure examination counter DC can be imaged. And the camera 111 digitizes an image obtained by imaging of a person passing through the departure examination counter DC by an A/D converter not shown, and outputs the digitized image.

Next, the facial feature extracting portion 113 detects a facial image from the image acquired by the image taking portion 112, and extracts feature data of the relevant detected facial image (step S1703). An extracting method of feature data from an image by the facial feature data extracting portion 113 is the same as the extracting method of feature date from an image by the facial feature extracting portion 103 which the boarding guide device 40 has.

Next, the person authenticating portion 115 executes a first authentication processing (1:1 collation) of a person passing through the departure examination counter DC, using the discrimination data read by the discrimination data reading portion 114 and the feature data extracted by the facial feature extracting portion 113 (step S1704). In the present embodiment, the person authenticating portion 115 firstly calculates a similarity between the feature data read by the discrimination data reading portion 114 as the discrimination data, and the feature data extracted by the facial feature extracting portion 113.

Specifically, the person authenticating portion 115 firstly performs calculation of a similarity index between the feature data read by the discrimination data reading portion 114, and the feature data extracted by the facial feature extracting portion 113. Here, the similarity index is determined to be a similarity between a subspace of the feature data read by the discrimination data reading portion 114, and a subspace of the feature data extracted by the facial feature extracting portion 113. The person authenticating portion 115 calculates an angle formed by the subspace of the feature data read by the discrimination data reading portion 114, and the subspace of the feature data extracted by the facial feature extracting portion 113, with the subspace method and the composite similarity methods and so on described in Japanese Patent No. 4087953 and so on, for example, as a similarity between the relevant two subspaces themselves.

Or, the person authenticating portion 115 may obtain a similarity between the relevant two feature data, using an Euclidean distance or a Mahalanobis distance between the feature data read by the discrimination data reading portion 114, and the feature data extracted by the facial feature extracting portion 113. In this case, in the person authenticating portion 115, the similarity becomes lower, as the Euclidean distance or the Mahalanobis distance between the feature data read by the discrimination data reading portion 114, and the feature data extracted by the facial feature extracting portion 113 becomes larger.

When the calculated similarity is not less than a first threshold value, the person authenticating portion 115 judges that the first authentication processing of a person passing through the departure examination counter DC has succeeded. In other words, when the calculated similarity is not less than the first threshold value, the person authenticating portion 115 judges that the person passing through the departure examination counter DC is a nominal person oneself of a passport P (step S1705: Yes). And when having judged that the person passing through the departure examination counter DC is the nominal person oneself of the passport P, the person authenticating portion 115 stores the imaging condition of the camera 111 in the second memory 46 as the imaging condition of the camera 131, in association with the discrimination data read by the discrimination data reading portion 114 (step S1706).

Here, the imaging condition is a condition of the camera 111 at the time of imaging a person who has been judged to be a nominal person oneself of a passport P. In the present embodiment, the imaging condition is data relating to an image (that is, an image from which feature data used in the first authentication processing has been acquired) obtained by imaging by the camera 111. Specifically, the imaging condition includes at least one of a facial image contained in an image obtained by imaging by the camera 111, a height of a person based on the relevant image, and an illumination condition (in other words, an illumination condition in an imaging range of the camera 111 when the relevant image has been obtained) based on the relevant image.

In addition, in the present embodiment, when having judged that a person passing through the departure examination counter DC is a nominal person oneself of a passport P, the person authenticating portion 115 stores the discrimination data read by the discrimination data reading portion 114, and feature data extracted by the facial feature extracting portion 113 in the first memory 45, in association with the device discrimination data of the first authenticating device 41. By this means, since it is possible to specify the discrimination data and the feature data stored in the first memory 45 is data used in the first authentication processing in what first authenticating device 41, when authentication processing using the discrimination data and feature data stored in the first memory 45 in the second authenticating device 42, it is possible to execute the authentication processing using the discrimination data and the feature data stored by the prescribed first authenticating device 41.

In the present embodiment, the person authenticating portion 115 stores the feature data extracted by the facial feature extracting portion 113 in the first memory 45, in association with the feature data read by the discrimination data reading portion 114 as the discrimination data, but without being limited to this, the person authenticating portion 115 may store the feature data extracted by the facial feature extracting portion 113 in the first memory 45, in association with a time indicating a time when the first authentication processing has been executed, and discrimination data such as a facial image, full name, birth date, sex, age, height and so on of a nominal person of a passport P, for example. In addition, the person authenticating portion 115 may store the feature vector, the subspace, the correlation matrix and so on of the feature data extracted by the facial feature extracting portion 113 in the first memory 45, in association with the discrimination data read by the discrimination data reading portion 114.

When it is judged that a person passing through the departure examination counter DC is a nominal person oneself of a passport P, the display portion 116 displays data so as to notify that the first authentication processing by the person authenticating portion 115 has succeeded (step S1707).

On the other hand, when the calculated similarity is less than the first threshold value, the person authenticating portion 115 judges that the first authenticating processing of a person passing through the departure examination counter DC has failed. In other words, when the calculated similarity is less than a first threshold value, the person authenticating portion 115 judges that a person passing through the departure examination counter DC is not a nominal person oneself of a passport P (step S1705: No). And when it is judged that a person passing through the departure examination counter DC is not a nominal person oneself of a passport P, the display portion 116 displays data so as to notify that the first authenticating processing by the person authenticating portion 115 has failed (step S1708).

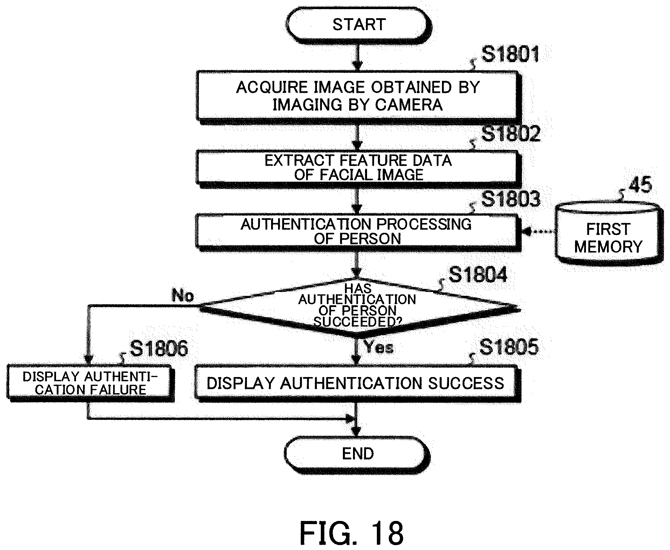

Next, an authenticating processing by the second authenticating device 42 which the immigration control system according to the present embodiment has will be described, using FIG. 18. FIG. 18 is a flow chart showing a flow of an authenticating processing by the second authenticating device which the immigration control system according to the present embodiment has.

To begin with, the image taking portion 122 controls the camera 121, to image a person passing through the boarding gate BG. And the image taking portion 122 acquires an image obtained by imaging by the camera 121 (step S1801). Here, the camera 121 is composed of a video camera, for example, and is provided so that a person passing through the boarding gate BG can be imaged. In the present embodiment, the camera 121 is provided so that a face of a person passing through the boarding gate BG can be imaged. And the camera 121 digitizes an image obtained by imaging a person passing through the boarding gate BG by an A/D converter not shown, and outputs the digitized image.

The facial feature extracting portion 123 detects a facial image from the image acquired by the image taking portion 122, and extracts feature data of the relevant detected facial image (step S1802). An extracting method of feature data from an image by the facial feature extracting portion 123 is the same as the extracting method of the feature data from an image by the facial feature extracting portion 103 which the boarding guide device 40 has.

The person retrieval portion 124 executes an authentication processing (1:N collation) of a person passing through the boarding gate BG, using the feature data extracted by the facial feature extracting portion 123, and the feature data stored in the first memory 45 (step S1803). At that time, the person retrieval portion 124 prohibits the execution of an authentication processing, using the feature data stored in association with the device discrimination data other than a prescribed device discrimination data, out of the feature data stored in the first memory 45. By this means, since it is possible to execute an authentication processing of a person passing through the boarding gate BG, using the feature data used in the first authentication processing of the prescribed first authenticating device 41, it is possible to improve the reliability of the authentication processing of a person passing through the boarding gate BG.

In the present embodiment, the person retrieval portion 124 calculates a similarity between each of the feature data stored in the first memory 45 and the feature data extracted by the facial data extracting portion 123. Here, a calculating method of a similarity by the person retrieval portion 124 is the same as the calculating method of a similarity by the person authenticating portion 115 which the first authenticating device 41 has. Next, the person retrieval portion 124 selects the feature data having the highest similarity with the feature data extracted by the facial feature extracting portion 123, out of the feature data stored in the first memory 45. And when the similarity between the selected feature data and the feature data extracted by the facial feature extracting portion 123 is not more than a first threshold value, the person retrieval portion 124 judges that the authentication processing of the person passing through the boarding gate BG has succeeded (in other words, judges that the feature data extracted by the facial feature extracting portion 123 coincides with any one of the feature data stored in the first memory 45), and permits the passing of the boarding gate BG (step S1804: Yes).

Further, when the authentication processing of a person passing through the boarding gate BG has succeeded, the display portion 125 displays data so as to notify that the authentication processing by the person retrieval portion 124 has succeeded (step S1805). In addition, when the authentication processing of a person passing through the boarding gate BG has succeeded, the person retrieval portion 124 erases various data (the device discrimination data, the feature data, the destination data, for example) stored in association with the discrimination data of the person who has succeeded in the authentication processing from the first memory 45. In addition, the person retrieval portion 124 erases also various data stored in association with the discrimination data in which a prescribed time has passed since it was stored in the first memory 45. By this means, in the authentication processing of a person passing through the boarding gate BG, since the number of feature data, out of the feature data stored in the first memory 45, which are used for calculating similarity with the feature data extracted in the step S1802 can be reduced, it is possible to omit an useless calculation processing, and thereby it is possible to achieve the improvement of the processing speed of the authentication processing and the saving of resources. In addition, it is possible to keep the reliability of the feature data stored in the first memory 45.

On the other hand, when the similarity between the selected feature data and the feature data extracted by the facial feature extracting portion 123 is less than the first threshold value, the person retrieval portion 124 judges that the authentication processing of the person passing through the boarding gate BG has failed, and prohibits the passing of the boarding gate BG (step S1804: No). Further, when the authentication processing of the person passing through the boarding gate BG has failed, the display portion displays data so as to notify that the authentication processing by the person retrieval portion 124 has failed (step S1806).

The person retrieval portion 124 can execute, to a plurality of feature data stored in the first memory 45, a processing to remove data unnecessary for the discrimination between the relevant feature data. For example, the person retrieval portion 124 projects or converts the feature vector stored in the first memory 45 as the feature data into a subspace, using the constraint mutual subspace method described in Japanese Patent No. 4087953 and so on, to enhance the discrimination accuracy between the feature data stored in the first memory 45. By this means, since it can be prevented that the authentication processing is executed using unnecessary data contained in the feature data, it is possible to improve the authentication accuracy of a passer by the authentication processing.

In the present embodiment, when the discrimination data read from a passport P by the discrimination data reading portion 114 of the first authenticating device 41 is feature data (an example of biological data), the person retrieval portion 124 may execute the authentication processing of a person passing through the boarding gate BG, using the discrimination data stored in the first memory 45, and the feature data extracted by the facial feature extracting portion 123. By this means, since an authentication processing of a person passing through the boarding gate BG is to be executed, using the feature data read from a passport P as the discrimination data, in the same manner as the first authenticating device 41, it is possible to ensure the security of the boarding gate BG. However, since the feature data read from a passport P as the discrimination data is generally feature data older than that at the time of executing the authentication processing, the authentication processing is subject to the secular change and so on of a person to be authenticated.

Accordingly, in the present embodiment, the person retrieval portion 124 executes the authentication processing of a person passing through the boarding gate BG, using the feature data (the feature data extracted by the facial feature extracting portion 113 of the first authenticating device 41) stored in the first memory 45, and the feature data extracted by the facial feature extracting portion 123, it can be reduced that the authentication processing is affected by the secular change and so on of a person to be authenticated, and it is also possible to improve the authentication accuracy of the relevant person.

Or, the person retrieval portion 124 may judge that the authentication processing of a person passing through the boarding gate BG has succeeded, when at least one of the discrimination data and the feature data stored in the first memory 45 coincides with the feature data extracted by the facial feature extracting portion 123. By this means, it is possible to decrease the failure of the authentication processing of a person passing through the boarding gate BG, using the data stored in the first memory 45.

In addition, the person retrieval portion 124 detects the congestion degree of the boarding gate BG based on an image and so on obtained by imaging by the camera 121, and changes (when the detected congestion degree is higher than a prescribed value, the processing speed of the authentication processing is increased, for example) the processing speed of the authentication processing of a person passing through the boarding gate BG, and thereby it is possible to control the number of persons passing through the boarding gate BG per unit time. Further, when the feature data extracted by the facial feature extracting portion 123 is prescribed feature data (for example, the feature data of a person of a first class), the person retrieval portion 124 may display data so as to notify to allow the person having the relevant prescribed feature data to board preferentially, on the display portion 125.

In addition, when the authentication processing of a person passing through the boarding gate BG has succeeded, the person retrieval portion 124 reads the destination data stored in the first memory 45, in association with the discrimination data coincident with the feature data extracted by the facial feature extracting portion 123. And when the destination which the read destination data indicates does not coincide with the destination of the airplane which the person having passed the boarding gate BG is to board, the person retrieval portion 124 can display data so as to notify that a passenger for a different destination exists on the display portion 125.

In addition, when the authentication processing of a person passing through the boarding gate BG has failed, the person retrieval portion 124 may display data so as to instruct boarding using an air ticket T held by a person passing through the boarding gate BG, on the display portion 125.

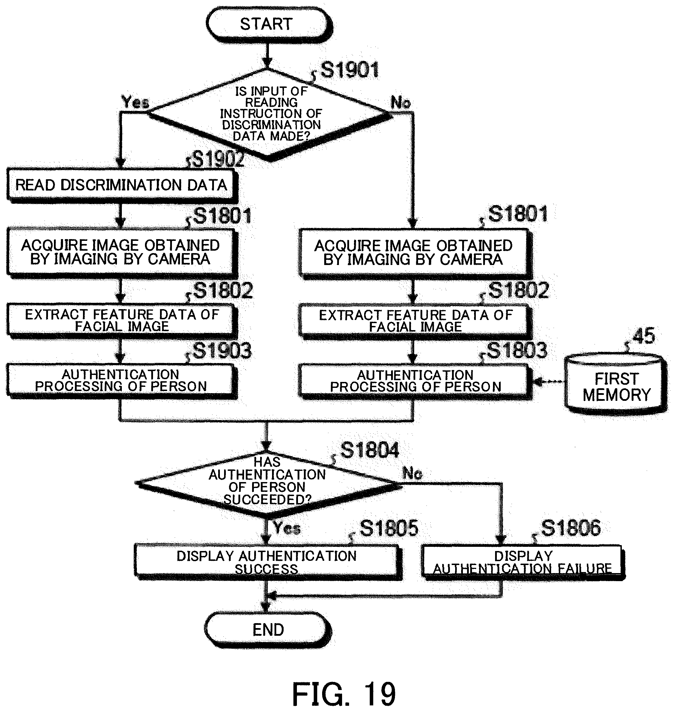

Next, an authentication processing will be described using FIG. 19, when the second authenticating device 42 which the immigration control system according to the present embodiment has, is provided with a reading portion which can read discrimination data from a passport P. FIG. 19 is a flow chart showing a flow of an authentication processing, when the second authenticating device which the immigration control system according to the present embodiment has is provided with a reading portion which can read discrimination data from a passport.

To begin with, the image taking portion 122 judges whether or not an input portion not shown provided in the second authenticating device 42 is operated, and an reading instruction to instruct reading of discrimination data from a passport P held by a person passing through the boarding gate BG is inputted (step S1901). When the reading instruction has not been inputted (step S1901: No), the second authenticating device 42 executes the same processings as the step S1801 - the step S1806 shown in FIG. 18.

On the other hand, when the reading instruction is inputted (step S1901: Yes), a reading portion not shown provided in the second authenticating device 42 reads, from a passport P held by a person passing through the boarding gate BG, discrimination data of a nominal person of the passport P (step S1902). A reading method of discrimination data from a passport P by a reading portion not shown provided in the second authenticating device 42 is the same as the reading method of the discrimination data from a passport P by the discrimination data reading portion 104 which the boarding guide device 40 has. Next, the second authenticating device 42 executes the same processings as the step S1801 - the step S1802 shown in FIG. 18.

Next, the person retrieval portion 124 executes an authentication processing of a person passing through the boarding gate BG, using the discrimination data read from a passport P by a reading portion not shown which the second authenticating device 42 has, and the feature data extracted by the facial feature extracting portion 123 (step S1903). In the present embodiment, the person retrieval portion 124 executes the authentication processing of a person passing through the boarding gate BG, in the same manner as the authentication processing by the person retrieval portion 115 provided in the first authenticating device 41.

However, when the discrimination data is read from a passport P by a reading portion not shown which the second authenticating device 42 has, since the authentication processing in the first authenticating device 41 is not performed, the person retrieval portion 124 may set a prescribed second threshold value which is to be compared with a similarity between the feature data read from a passport P as the discrimination data, and the feature data extracted by the facial feature extracting portion 123, higher than the first threshold value used in the authentication processing in the first authenticating device 41. Or, when the efficiency of the authentication processing of a person passing through the boarding gate BG is prioritized, the person retrieval portion 124 may set the second threshold value lower than the first threshold value.

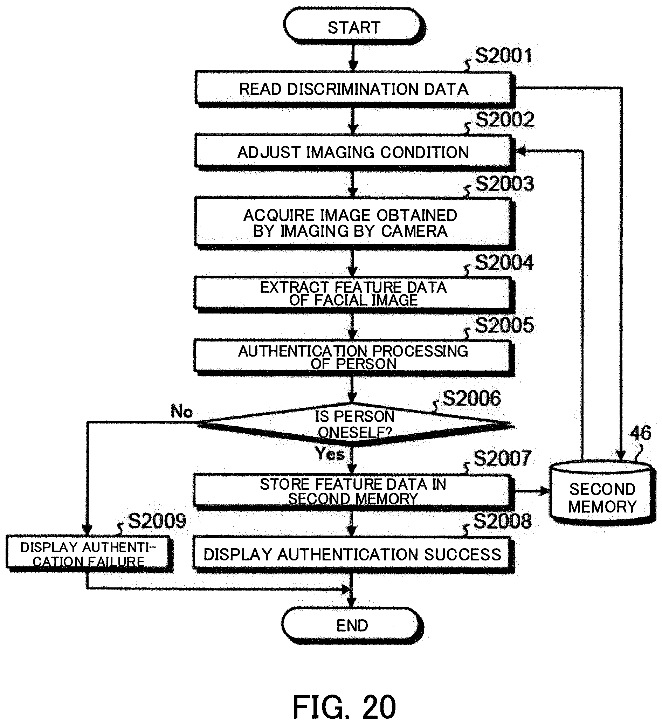

Next, an authentication processing by the third authenticating device 43 which the immigration control system according to the present embodiment has will be described using FIG. 20. FIG. 20 is a flow chart showing a flow of an authentication processing by the third authenticating device 43 which the immigration control system according to the present embodiment has.

To begin with, the discrimination data reading portion 132 reads, from a passport held by a person passing through the immigration examination counter IC, discrimination data of a nominal person of the passport P (step S2001). A reading method of discrimination data from a passport P by the discrimination data reading portion 132 is the same as the reading method of the discrimination data from a passport P by the discrimination data reading portion 104 which the boarding guide device 40 has.

When the discrimination data is read, the imaging parameter controlling portion 133 reads the imaging condition stored in association with the discrimination data coincident with the discrimination data read by the discrimination reading portion 132, from the second memory 46. And the imaging parameter controlling portion 133 adjusts the imaging condition of the camera 131, in accordance with the read imaging condition (step S2002). By this means, since the second authenticating processing can be executed, using the biological data acquired from an image obtained by imaging by the camera 131 under the same imaging condition as the imaging condition of the camera 111 when the first authentication processing has succeeded in the departure examination counter DC, it is possible to improve the authentication accuracy of a person in the immigration examination counter IC.

In the present embodiment, when the read imaging condition contains a height, the imaging parameter controlling portion 133 adjusts the imaging range of the camera 131 in accordance with the relevant height, so that a face of a person passing through the immigration examination counter IC can be imaged from the front. In addition, in the present embodiment, when the read imaging condition contains an illumination condition, the imaging parameter controlling portion 133 adjusts a light source which can irradiate the immigration examination counter IC with light, in accordance with the illumination condition.

In addition, in the present embodiment, when the read imaging condition contains a facial image, the imaging parameter controlling portion 133 displays a first instruction so as to instruct the expression similar to the relevant facial image on the display portion 137. In addition, when the read imaging condition contains a facial image and the relevant facial image is an image of a spectacled face, the imaging parameter controlling portion 133 displays a second instruction so as to instruct to wear spectacles on the display portion 137. In addition, when the read imaging condition contains a facial image, the imaging parameter controlling portion 133 can display a third indication so as to instruct a hairstyle close to the relevant facial image on the display portion 137. By this means, since the second authentication processing can be executed, using the biological data acquired from an image obtained by imaging by the camera 131, under the imaging condition which is closer to the imaging condition of the camera 111 when the first authentication processing has succeeded in the departure examination counter DC, it is possible to further improve the authentication accuracy of a person at the immigration examination counter IC.

Next, after the imaging condition of the camera 131 has been adjusted, the image taking portion 134 controls the camera 131, to image a person passing through the immigration examination counter IC. And, the image taking portion 134 acquires an image obtained by imaging by the camera 131 (step S2003). Here, the camera 131 is composed of a video camera, for example, and is provided so that a person passing through the immigration examination counter IC can be imaged. In the present embodiment, the camera 131 is provided so that a face of a person passing through the immigration examination counter IC can be imaged. And, the camera 131 digitizes an image obtained by imaging a person passing through the immigration examination counter IC by an A/D converter not shown, and outputs the digitized image.

Next, the facial feature extracting portion 135, detects a facial image from an image acquired by the image taking portion 134, and extracts feature data of the relevant detected facial image (step S2004). An extracting method of feature data from an image by the facial feature extracting portion 135 is the same as the extracting method of the feature data from an image by the facial feature extracting portion 103 which the boarding guide device 40 has.

Next, the person authenticating portion 136 executes a second authentication processing (1:1 collation) of a person passing through the immigration examination counter IC, using the discrimination data read by the discrimination data reading portion 132, and the feature data extracted by the facial feature extracting portion 135 (step S2005). An authenticating method of a person by the person authenticating portion 136 is the same as the authenticating method of a person by the person authenticating portion 115 which the first authenticating device 41 has.

In the present embodiment, in the cane in which the read imaging condition contains a height, when a similarity between the feature data read by the discrimination data reading portion 132 as the discrimination data, and the feature data extracted by the facial feature extracting portion 135 is not less than a first threshold value, and a height which the read imaging condition contains coincides with a height of a person based on an image acquired by the image taking portion 134, the person authenticating portion 136 can judge that the second authentication processing has succeeded. By this means, since the second authentication processing is executed in consideration of the height of the relevant person, in addition to the feature data of a person passing through the immigration examination counter IC, it is possible to improve the authentication accuracy of a person by the second authentication processing.

When having judged that the second authentication processing of a person passing through the immigration examination counter IC has succeeded, and the person passing through the immigration examination counter IC is a nominal person of a passport P oneself (step S2006: Yes), the person authenticating portion 136 stores the feature data extracted by the facial feature extracting portion 135 in the second memory 46, in association with the discrimination date read by the discrimination data reading portion 135 (step S2007). Further, when it is judged that a person passing through the immigration examination counter IC is a nominal person oneself of a passport P, the display portion 137 displays data so as to notify that the second authentication processing by the person authenticating portion 136 has succeeded (step S2008).

On the other hand, when it is judged that a person passing through the immigration examination counter IC is not a nominal person oneself of a passport P (step S2006: No), the display portion 137 displays data so as to notify that the second authentication processing by the person authenticating portion 136 has failed (step S2009).

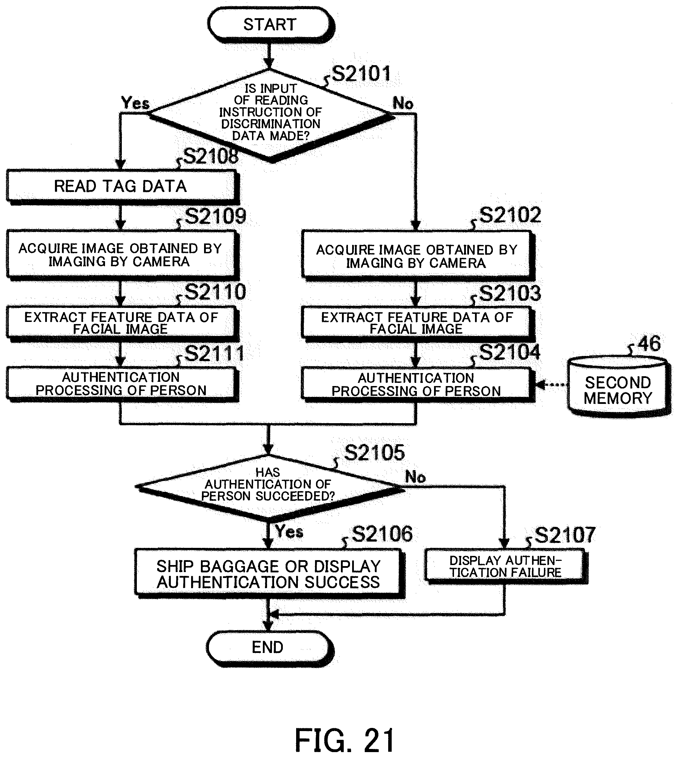

Next, an authentication processing by the fourth authenticating device 44 which the immigration control system according to the present embodiment has will be described using FIG. 21. FIG. 21 is a flow chart showing a flow of an authentication processing by the fourth authenticating device 44 which the immigration control system according to the present embodiment has.

To begin with, each of the first image taking portion 142 and the second image taking portion 146 judges whether or not an input portion not shown provided in the fourth authenticating device 44 is operated, and a reading instruction to indicate reading of tag data from a baggage tag 400 held by a person passing through the baggage pick-up corner BC is inputted (step S2101).

When the reading instruction is not inputted (step S2101: No), the first image taking portion 142 controls the camera 141, to image a person passing through the baggage pick-up corner BC. And the first image taking portion 142 acquires an image obtained by imaging by the camera 141 (step S2102). Here, the camera 141 is composed of a video camera, for example, and is provided so that a person passing through the baggage pick-up corner BC can be imaged. In the present embodiment, the camera 141 is provided so that a face of a person passing through the baggage pick-up corner BC can be imaged. And, the camera 141 digitizes an image obtained by imaging a person passing through the baggage pick-up corner BC by an A/D converter not shown, and outputs the digitized image.

The first facial feature extracting portion 143 detects a facial image from the image acquired by the first image taking portion 142, and extracts feature data of the detected facial image (step S2103). An extracting method of the feature data from an image by the first facial image extracting portion 143 is the same as the extracting method of the feature data from the image by the facial feature extracting portion 103 which the boarding guide device 40 has.

The person retrieval portion 144 executes an authentication processing (1:N collation) of a person passing through the baggage pick-up corner BC, using the feature data extracted by the first facial feature extracting portion 143, and the feature data stored in the second memory 46 (step S2104). An authentication processing by the person retrieval portion 144 is the same as the authentication processing by the person retrieval portion 124 which the second authenticating device 42 has.

And, when a similarity between the selected feature data and the feature data extracted by the first feature extracting portion 143 is not less than a first threshold value, the person retrieval portion 144 judges that an authentication processing of a person passing through the baggage pick-up corner BC has succeeded (in other words, judges that the feature data extracted by the first facial feature extracting portion 143 coincides with any of the feature data stored in the second memory 46), and permits the passing of the baggage pick-up corner BC (step S2105: Yes).

Further, when the authentication processing of a person passing through the baggage pick-up corner BC has succeeded, the first display portion 145 displays data so as to notify that the authentication processing by the person retrieval person 144 has succeeded (step S2106). In addition, when the authentication processing of a person passing through the baggage pick-up corner BG has succeeded, the person retrieval portion 144 erases various data (feature data, for example) stored in association with the discrimination data of a person who has succeeded in the authentication processing, from the second memory 46. Or, the person retrieval portion 144 erases also the various data stored in association with the discrimination data in which a prescribed time has passed since it was stored in the second memory 46.

By this means, in the authentication processing of a person passing through the baggage pick-up corner BC, out of the feature data stored in the second memory 46, the number of feature data which are used for calculating a similarity with the feature data extracted in the step S2103 can be reduced, it is possible to omit an useless calculation processing, and thereby it is possible to achieve the improvement of the processing speed of the authentication processing and the saving of resources. In addition, it is possible to keep the reliability of feature data stored in the second memory 46.

On the other hand, when the similarity between the selected feature data and the feature data extracted by the first facial feature extracting portion 143 is less than the first threshold value, the person retrieval portion 144 judges that the authentication processing of a person passing through the baggage pick-up corner BC has failed, and prohibits the passing of the baggage pick-up corner BC. Further, when the authentication processing of a person passing through the baggage pick-up corner BC has failed, the first display portion 145 displays data so as to notify that the authentication processing by the person retrieval portion 144 has failed (step S2107).

When the reading instruction has been inputted (step S2101: Yes), the tag data reading portion 148 reads tag data from the baggage tag 400 held by a person passing through the baggage pick-up corner BC (step S2108). A reading method of tag data from the baggage tag 400 by the tag data reading portion 148 is the same as the reading method of the discrimination data from a passport P by the discrimination data reading portion 104 which the boarding guide device 40 has.

When the discrimination data is read, the second image taking portion 146 controls the camera 141, to image a person passing through the baggage pick-up corner BC. And, the second image taking portion 146 controls the camera 141, to image a person passing through the baggage pick-up corner BC. And the second image taking portion 146 acquires an image obtained by imaging by the camera 141 (step S2109).

The second facial feature extracting portion 147 detects a facial image from the image acquired by the second image taking portion 147, and extracts feature data of the detected facial image (step S2110). An extracting method of feature data from an image by the second facial image extracting portion 147 is the same as the extracting method of the feature data from the image by the facial feature extracting portion 103 which the boarding guide device 40 has.

The person authenticating portion 149 executes an authentication processing of a person passing through the baggage pick-up corner BC, using the tag data read by the tag data reading portion 148 and the feature data extracted by the second facial feature extracting portion 147 (step S2111). An authenticating method of a person by the person authenticating portion 149 is the same as the authenticating method of a person by the person authenticating portion 115 which the first authenticating device 41 has.

And, when the similarity between the tag data read by the tag data reading portion 148 and the feature data extracted by the second facial feature extracting portion 147 is not less than a first threshold value, the person authenticating portion 149 judges that the authentication processing of a person passing through the baggage pick-up corner BC has succeeded (step S2105: Yes), and ships the baggage of the person passing through the baggage pick-up corner BC (step S2106). At that time, the person authenticating portion 149 ships the baggage of a person passing through the baggage pick-up corner BC, sequentially from the earlier order subjected to the authentication processing, and thereby it is also possible to make the receiving of the baggage more efficient. In addition, the person authenticating portion 149 can display the whereabouts of the baggage of the relevant person, and a waiting time till the baggage is shipped, on the second display portion 150, based on the result of the authentication processing of a person passing through the baggage pick-up corner BC.

On the other hand, when the similarity between the tag data read by the tag data reading portion 148, and the feature data extracted by the second facial feature extracting portion 147 is less than the first threshold value, the person authenticating portion 149 judges that the authentication processing of a person passing through the baggage pick-up corner BC has failed, and prohibits shipping of the baggage to the person passing through the baggage pick-up corner BC. Further, when the authentication processing of a person passing through the baggage pick-up corner BS has failed, the second display portion 150 displays data so as to notify that the authentication processing by the person authenticating portion 149 has failed (step S2107).

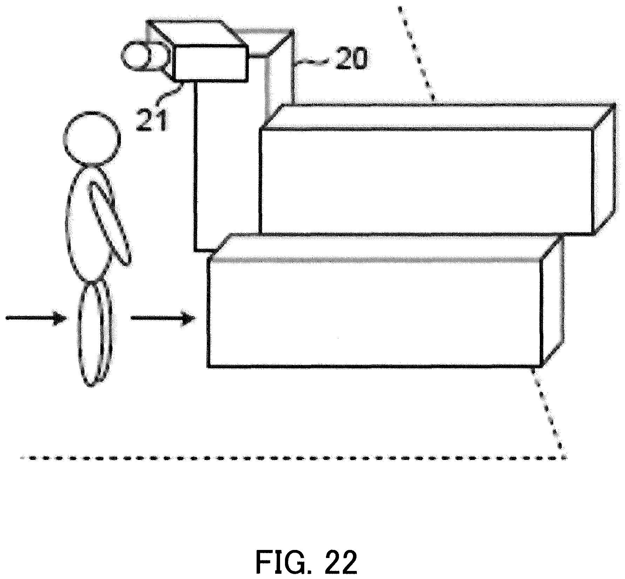

(Fourth embodiment) In the above-described embodiments, a passer has to stand still at the time of photographing by a camera, but as a fourth embodiment, even while a passer is walking as shown in FIG. 22, it is possible to perform the photographing and collation of the passer by the second imaging portion 21 installed in the second authenticating device 20, for example.

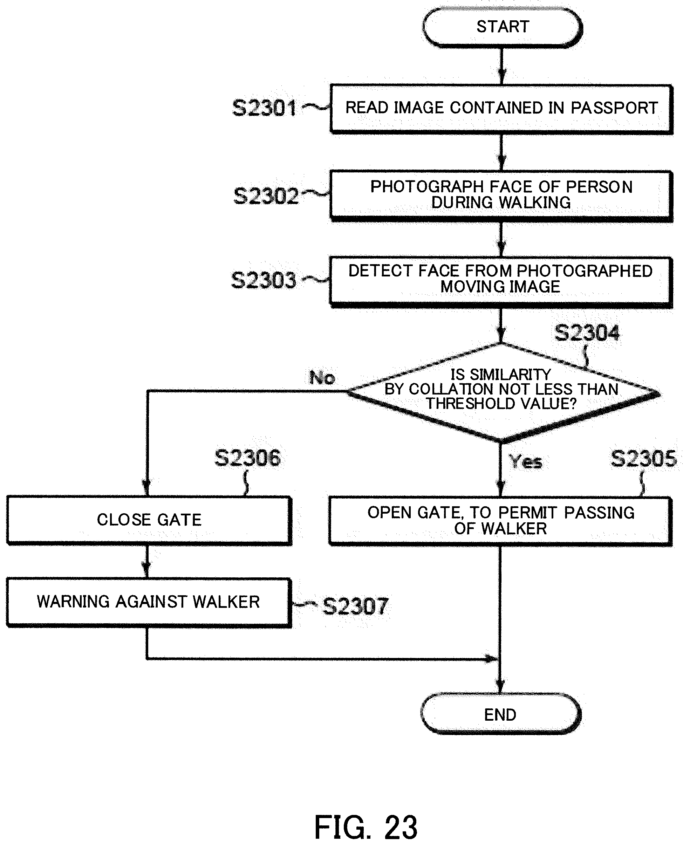

That is, an operation will be described in accordance with a flow chart shown in FIG. 23. An IC image of a passport P is read when a walker enters a gate GT (step S2301). The second imaging portion 21 images a face of a person during walking by the second imaging portion 21 (step S2302). Detection and tracking of a face are performed from the obtained photographed moving image (step S2303). Collation whether or not a walker is the person oneself is performed, using at least one facial image out of a plurality of tracked facial images, and if a similarity by the collation is not less than a threshold value (step S2304; Yes), the gate GT is opened, to permits the passing of the walker (step S2305). When the similarity by the collation is not more than the threshold value (step S2304; No), the gate GT is closed (step S2306). And an alarm is generated to the walker (step S2307).

In this manner, according to the immigration control system of the present embodiment, it is possible to improve the authentication accuracy of a person at the immigration examination counter IC.

In addition, the program to be executed in the boarding guide device 40, the first authenticating device 41, the second authenticating device 42, the third authenticating device 43, the fourth authenticating device 44 of the present embodiment, is provided with being previously incorporated in a ROM (Read Only Memory) and so on.

The program to be executed in the boarding guide device 40, the first authenticating device 41, the second authenticating device 42, the third authenticating device 43, the fourth authenticating device 44 of the present embodiment, may be configured such that the program is provided with being recoded in a computer readable recording medium, such as a CD-ROM, a flexible disk (FD), a CD-R, a DVD (Digital Versatile Disk) in a file form of an installable format or an executable format.

Further, the program to be executed in the boarding guide device 40, the first authenticating device 41, the second authenticating device 42, the third authenticating device 43, the fourth authenticating device 44 of the present embodiment may be configured such that the program is stored on a computer connected to a network such as Internet, and is provided by being downloaded through the network. In addition, the program to be executed in the boarding guide device 40, the first authenticating device 41, the second authenticating device 42, the third authenticating device 43, the fourth authenticating device 44 of the present embodiment may be configured such that the program is provided or distributed through a network such as Internet.

The program to be executed in the boarding guide device 40 of the present embodiment has a modular configuration containing the above-described respective portions (the image taking portion 102, the facial feature extracting portion 103, the discrimination data reading portion 104), and as an actual hardware, a CPU (Central Processing Unit) reads and executes the program from the above-described ROM, and thereby the above-described respective portions are loaded on a main storage device, and accordingly, the image taking portion 102, the facial feature extracting portion 103, the discrimination data reading portion 104 are to be generated on the main storage device.

The program to be executed in the first authenticating device 41 of the present embodiment has a modular configuration containing the above-described respective portions (the image taking portion 112, the facial feature extracting portion 113, the discrimination data reading portion 114, the person authenticating portion 115), and as an actual hardware, a CPU reads and executes the program from the above-described ROM, and thereby the above-described respective portions are loaded on a main storage device, and accordingly, the image taking portion 112, the facial feature extracting portion 113, the discrimination data reading portion 114, the person authenticating portion 115 are to be generated on the main storage device.

The program to be executed in the second authenticating device 42 of the present embodiment has a modular configuration containing the above-described respective portions (the image taking portion 122, the facial feature extracting portion 123, the person retrieval portion 124), and as an actual hardware, a CPU reads and executes the program from the above-described ROM, and thereby the above-described respective portions are loaded on a main storage device, and accordingly, the image taking portion 122, the facial feature extracting portion 123, the person retrieval portion 124 are to be generated on the main storage device.

The program to be executed in the third authenticating device 43 of the present embodiment has a modular configuration containing the above-described respective portions (the imaging parameter controlling portion 133, the image taking portion 134, the facial feature extracting portion 135, the discrimination data reading portion 132, the person authenticating portion 136), and as an actual hardware, a CPU reads and executes the program from the above-described ROM, and thereby the above-described respective portions are loaded on a main storage device, and accordingly, the imaging parameter controlling portion 133, the image taking portion 134, the facial feature extracting portion 135, the discrimination data reading portion 132, the person authenticating portion 136 are to be generated on the main storage device.

The program to be executed in the fourth authenticating device 44 of the present embodiment has a modular configuration containing the above-described respective portions (the first image taking portion 142, the first facial feature extracting portion 143, the person retrieval portion 144, the second image taking portion 146, the second facial image extracting portion 147, the tag data reading portion 148, the person authenticating portion 149), and as an actual hardware, a CPU reads and executes the program from the above-described ROM, and thereby the above-described respective portions are loaded on a main storage device, and accordingly, the first image taking portion 142, the first facial feature extracting portion 143, the person retrieval portion 144, the second image taking portion 146, the second facial image extracting portion 147, the tag data reading portion 148, the person authenticating portion 149 are to be generated on the main storage device.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

Hereinafter, means for solving the problem of the present embodiment will be described as follows.
[1] An information processing method which is provided with,
   a process which, from a storage device which stores, in association with first discrimination data of a person having passed through a first position, a first imaging condition of a first imaging portion which has obtained a first image used in a first authentication processing of the person passing through the first position, reads the first imaging condition stored in association with the first discrimination data coincident with second discrimination data read from a medium held by a person passing through a second position different from the first position,
   a process to adjust a second imaging condition of a second imaging portion which can image the person passing through the second position, in accordance with the read first imaging condition, and
   a process to executed a second authentication processing of the person passing through the second position, using the second discrimination data, and biological data acquired from a second image obtained by imaging by the second imaging portion.
[2] The information processing method of [1], wherein the first imaging condition is data relating to the first image.
[3] The information processing method of [2], wherein the first imaging condition includes at least one of a facial image contained in the first image, a first height of the person based on the first image, and an illumination condition based on the first image.
[4] The information processing method of [3], wherein when the first imaging condition includes the first height, a similarity between feature data of a facial image as the second discrimination data, and feature data of a facial image contained in the second image is not less than a prescribed threshold value, and when the first height coincides with a second height of the person based on the second image, that the second authentication processing has succeeded is recognized.
[5] The information processing method of [3], wherein when the first imaging condition includes the first height, an imaging range of the second imaging portion is adjusted in accordance with the relevant first height, so that a face of the person passing through the second position is imaged from the front.
[6] The information processing method of [3], wherein when the first imaging condition includes the illumination condition, a light source which can irradiate the imaging range of the second imaging portion with light is adjusted, in accordance with the relevant illumination condition.
[7] The information processing method of [3], wherein when the first imaging condition includes a facial image contained in the first image, a first instruction so as to instruct the expression similar to the relevant facial image is displayed on a display portion.
[8] The information processing method of [3], wherein when the first imaging condition includes a facial image contained in the first image, and the relevant facial image is an image of a spectacled image, a second instruction so as to instruct to wear spectacles is displayed on a display portion.
[9] The information processing method of [3], wherein when the first imaging condition includes a facial image contained in the first image, a third instruction so as to instruct a hair style close to the relevant facial image is displayed on a display portion.
[10] An information processing system which is provided with,
   a first authenticating portion which, using first discrimination data read from a medium held by a person passing through a first position, and first biological data acquired from a first image obtained by imaging the relevant person by a first imaging portion, executes a first authentication processing of the relevant person,
   a memory to store a first imaging condition of the first imaging portion, in association with the first discrimination data, when the first authentication processing has succeeded,
   an adjusting portion which reads the first imaging condition stored, in association with the first discrimination data coincident with second discrimination data read from a medium held by a person passing through a second position different from the first position, and adjusts a second imaging condition of a second imaging portion which can image a person passing through the second position, in accordance with the read first imaging condition, and
   a second authenticating portion which, using the second discrimination data, and biological data acquired from a second image obtained by imaging by the second imaging portion, executes a second authentication processing of the person passing through the second position.

## Claims

1. An information processing method, comprising:
a process to execute, using first biological data read from a medium held by a passer passing through a first position, and second biological data acquired from an image obtained by imaging the passer passing through the first position, a first authentication processing to authenticate the passer;
a process to store third biological data, based on at least one of the first biological data and the second biological data used in the first authentication processing, in a memory, when the authentication of the passer by the first authentication processing has succeeded;
a process to execute, using fourth biological data acquired from an image obtained by imaging a passer passing through a second position at a more downstream side than the first position in a proceeding direction of the passer, and the third biological data stored in the memory, a second authentication processing to authenticate the passer; and
a process to permit passing through the second position, when the passer is authenticated by the second authentication processing.

2. The information processing method according to Claim 1, further comprising:
a process to display the execution result of the first authentication processing or the execution result of the second authentication processing on a manager monitor.

3. The information processing method according to Claim 1, further comprising:
a process to store the first biological data or the second biological data in the memory, as the third biological data.

4. The information processing method according to Claim 1, wherein the second authentication processing has a process to judge that the authentication of the passer has succeeded, when the fourth biological data coincides with any of the third biological data stored in the memory.

5. The information processing method according to Claim 4, further comprising:
a process to erase the third biological data coincident with the fourth biological data from the memory, when the authentication of the passer by the second authentication processing has succeeded.

6. The information processing method according to Claim 1, further comprising:
a process to execute a process to remove data unnecessary for discrimination between the third biological data, to a plurality of the third biological data stored in the memory.

7. The information processing method according to Claim 1, further comprising:
a process to execute, when fifth biological data is read from a medium held by the passer passing through the second position, a third authentication processing to authenticate the passer, using the fourth biological data and the fifth biological data, in place of the second authentication processing.

8. The information processing method according to Claim 1, further comprising:
a process to image the passer passing through the second position during walking.

9. An information processing system, comprising:
a reading portion (14) provided so that first biological data can be read from a medium (M) held by a passer passing through a first position (P1);
a first imaging portion (11) provided so that the passer passing through the first position (P1) can be imaged;
a first authenticating portion (15) to execute a first authentication processing to authenticate the passer, using the first biological data read by the reading portion (14), and second biological data acquired from a first image obtained by imaging by the first imaging portion (11) when the first biological data is read;
a memory control portion (15) which, when the authentication of the passer by the first authentication processing has succeeded, makes third biological data based on at least one of the first biological data and the second biological data used in the first authentication processing to be stored in a memory (31), and when the authentication of the passer by the first authentication processing has failed, prohibits storing the third biological data in the memory (31);
a second imaging portion (21) provided so that a passer passing through a second position (P2) at a more downstream side than the first position (P1) in a proceeding direction of the passer can be imaged; and
a second authenticating portion (72) to execute a second authentication processing to authenticate the passer, using fourth biological data acquired from an image obtained by imaging by the second imaging portion (21), and the third biological data stored in the memory (31).

10. The information processing system according to Claim 9, further comprising:
a manager monitor (17) to display the execution result of the first authentication processing or the execution result of the second authentication processing.

11. The information processing system according to Claim 9, wherein the second imaging portion (21) images the passer passing through the second position (P2) during walking.

12. An information processing method, comprising:
a process which, using first discrimination data read from a medium held by a person passing through a first position, and first biological data acquired from a first image obtained by imaging the relevant person by a first imaging portion, executes a first authentication processing of the relevant person; and
a process which, when the first authentication processing has succeeded, stores a first imaging condition of the first imaging portion in a memory, as a second imaging condition of a second imaging portion to obtain a second image so as to acquire second biological data to be used in a second authentication processing of a person passing through a second position different from the first position, in association with the first discrimination data.

13. The information processing method according to Claim 12, wherein the first imaging condition is data relating to the first image.

14. The information processing method according to Claim 13, wherein the first imaging condition includes at least one of a facial image contained in the first image, a first height of a person based on the first image, and an illumination condition based on the first image.

15. The information processing method according to Claim 12, further comprising:
a process to display the execution result of the first authentication processing or the execution result of the second authentication processing on a manager monitor.

16. The information processing method according to Claim 12, wherein:
the second imaging portion has a process to image the passer passing through the second position during walking.
